# EUROPEAN PATENT APPLICATION

(11) **EP 4 797 832 A1**
(43) Date of publication of application: **26.08.2026**
(21) Application number: 24884634.7
(22) Date of filing: 28.10.2024
(51) Int. Cl.: H04W 72/044

(54) **COMMUNICATION METHOD AND COMMUNICATION APPARATUS**

(30) Priority: 31.10.2023 CN 202311437659
(71) Applicant: HUAWEI TECHNOLOGIES CO., LTD., Shenzhen, Guangdong 518129 (CN)
(72) Inventor: HU, Mengshi, Shenzhen, Guangdong 518129 (CN); GAN, Ming, Shenzhen, Guangdong 518129 (CN); GONG, Bo, Shenzhen, Guangdong 518129 (CN); YU, Jian, Shenzhen, Guangdong 518129 (CN)
(74) Representative: Maiwald GmbH
(86) International application number: PCT/CN2024/127632
(87) International publication number: WO 2025/092631

(57) **Abstract**

This application provides a communication method and a communication apparatus. The method includes: sending a first PPDU, where the first PPDU includes a first field used for beam training, a frequency domain range corresponding to the first field includes a first frequency domain sub-range and a second frequency domain sub-range, and a sum of the first frequency domain sub-range and the second frequency domain sub-range is less than or equal to a first frequency domain range corresponding to the first PPDU; and sending a first beam set in the first frequency domain sub-range of the first field, and sending a second beam set in the second frequency domain sub-range of the first field, where a direction of a first beam sent in the first frequency domain sub-range at a first moment is different from a direction of a second beam sent in the second frequency domain sub-range at the first moment. In the communication method, a field used for beam training in the PPDU corresponds to a plurality of frequency domain ranges, and at least one different beam may be sent in a frequency domain range at a same moment, to implement a frequency division beam training solution and reduce beam training overheads.

## Description

This application claims priority to Chinese Patent Application No. 202311437659.9, filed with the China National Intellectual Property Administration on October 31, 2023 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

Since development of a wireless local area network (wireless local area network, WLAN), 802.11 is one of current mainstream wireless access standards. The 802.11 standard includes standards below 7 gigahertz (Gigahertz, GHz), such as 802.11a/b/g, 802.11n, 802.11ac, 802.11ax, 802.11be, and 802.11bn, and further includes high-frequency standards (for example, standards at 45 GHz and above), such as the 802.11ad standard, the 802.11ay standard, and a to-be-formulated integrated millimeter wave standard (Integrated mmWave standard) that operate near 60 GHz.

In high-frequency communication, due to a large path loss of a channel, at least one device usually uses directional (directional) communication when two devices communicate with each other. When directional beam transmission (for example, directional sending and/or directional receiving) is used, beam training may be performed through sector-level sweep (sector-level sweep, SLS).

In a currently provided beam training technology, beam training in a sending direction or a receiving direction is usually performed in a time division manner in a beam training process. In this time division beam training manner, resource overheads are high. Therefore, how to reduce beam training overheads becomes an urgent problem to be resolved.

### SUMMARY

This application provides a communication method, to reduce beam training overheads.

According to a first aspect, a communication method is provided. The method may be performed by a first station, or may be performed by a component (for example, a chip or a circuit) of a first station. This is not limited.

The communication method includes: sending a first physical layer protocol data unit PPDU, where the first PPDU includes a first field used for beam training, a frequency domain range corresponding to the first field includes a first frequency domain sub-range and a second frequency domain sub-range, the first frequency domain sub-range and the second frequency domain sub-range have a non-overlapping part, and a sum of the first frequency domain sub-range and the second frequency domain sub-range is less than or equal to a first frequency domain range corresponding to the first PPDU; and sending a first beam set in the first frequency domain sub-range of the first field, and sending a second beam set in the second frequency domain sub-range of the first field, where a direction of a first beam sent in the first frequency domain sub-range at a first moment is different from a direction of a second beam sent in the second frequency domain sub-range at the first moment, the first beam belongs to the first beam set, and the second beam belongs to the second beam set.

Based on the foregoing technical solution, the first PPDU sent by the first station carries the first field (for example, a training field (training field, TRN field)) used for beam training, and the frequency domain range corresponding to the first field includes the first frequency domain sub-range and the second frequency domain sub-range. Specifically, the first frequency domain sub-range and the second frequency domain sub-range have the non-overlapping part, and the sum of the first frequency domain sub-range and the second frequency domain sub-range is less than or equal to the frequency domain range in which the first station sends the first PPDU. The first station may send the first beam set in the first frequency domain sub-range of the first field, and send the second beam set in the second frequency domain sub-range of the first field, where directions of beams sent in different frequency domain sub-ranges at at least one moment are different, so that beams used for beam training are sent in different frequency domain sub-ranges in a frequency division manner, to implement frequency division beam training and reduce beam training overheads.

With reference to the first aspect, in some implementations of the first aspect, the method further includes: sending first indication information, where the first indication information indicates one or more of the following information: a quantity of frequency domain sub-ranges corresponding to the first field, a size of the first frequency domain sub-range, or a size of the second frequency domain sub-range.

Based on the foregoing technical solution, the first station may indicate, based on the first indication information, the quantity of frequency domain ranges that correspond to the first field and that are carried in the first PPDU, and may indicate the size of the first frequency domain sub-range and the size of the second frequency domain sub-range that correspond to the first field. Therefore, a receive end that receives the first PPDU may clearly learn, based on the first indication information, that beams used for beam training that are sent on the first field carried in the first PPDU may be sent in a frequency division manner.

According to a second aspect, a communication method is provided. The method may be performed by a first station, or may be performed by a component (for example, a chip or a circuit) of a first station. This is not limited.

The communication method includes: sending a first physical layer protocol data unit PPDU and first indication information, where the first PPDU includes a first field used for beam training, a frequency domain range corresponding to the first field includes a first frequency domain sub-range and a second frequency domain sub-range, the first indication information indicates a size of the first frequency domain sub-range and a size of the second frequency domain sub-range, the first frequency domain sub-range and the second frequency domain sub-range have a non-overlapping part, and a sum of the first frequency domain sub-range and the second frequency domain sub-range is less than or equal to a first frequency domain range corresponding to the first PPDU.

Based on the foregoing technical solution, the first PPDU sent by the first station carries the first field (for example, a training field) used for beam training, and the frequency domain range corresponding to the first field includes the first frequency domain sub-range and the second frequency domain sub-range. Specifically, the first frequency domain sub-range and the second frequency domain sub-range have the non-overlapping part, and the sum of the first frequency domain sub-range and the second frequency domain sub-range is less than or equal to the frequency domain range in which the first station sends the first PPDU. The first station may indicate, based on the first indication information, the size of the first frequency domain sub-range and the size of the second frequency domain sub-range that correspond to the first field carried in the first PPDU. Therefore, a receive end that receives the first PPDU may clearly learn, based on the first indication information, that beams used for beam training that are sent on the first field carried in the first PPDU may be sent in a frequency division manner.

With reference to the second aspect, in some implementations of the second aspect, the method further includes: sending a first beam set in the first frequency domain sub-range of the first field, and sending a second beam set in the second frequency domain sub-range of the first field, where a direction of a first beam sent in the first frequency domain sub-range at a first moment is different from a direction of a second beam sent in the second frequency domain sub-range at the first moment, the first beam belongs to the first beam set, and the second beam belongs to the second beam set.

Based on the foregoing technical solution, the first station may send the first beam set in the first frequency domain sub-range of the first field, and send the second beam set in the second frequency domain sub-range of the first field, where directions of beams sent in different frequency domain sub-ranges at at least one moment are different, so that beams used for beam training are sent in different frequency domain sub-ranges in a frequency division manner, to implement frequency division beam training and reduce beam training overheads.

With reference to the first aspect or the second aspect, in some implementations of the first aspect or the second aspect, the method further includes: sending third indication information, where the third indication information indicates a first device to send a second field used for beam training, a frequency domain range corresponding to the second field includes a third frequency domain sub-range and a fourth frequency domain sub-range, and a direction of a beam sent in the third frequency domain sub-range at a second moment is different from a direction of a beam sent in the fourth frequency domain sub-range at the second moment.

Based on the foregoing technical solution, the first station may indicate, based on the third indication information, the first device to send, in different frequency domain sub-ranges in the second field, beams used for beam training in a frequency division manner, to implement frequency division beam training and reduce beam training overheads.

With reference to the first aspect or the second aspect, in some implementations of the first aspect or the second aspect, the method further includes: sending fourth indication information, where the fourth indication information indicates the first device to send a third field used for beam training and indicates a second device to send a fourth field used for beam training, a frequency domain range corresponding to the third field includes a fifth frequency domain sub-range, a frequency domain range corresponding to the fourth field includes a sixth frequency domain sub-range, and a direction of a beam sent in the fifth frequency domain sub-range at a third moment is different from a direction of a beam sent in the sixth frequency domain sub-range at the third moment.

Based on the foregoing technical solution, the first station may indicate, based on the fourth indication information, a plurality of devices to send, in different frequency domain sub-ranges, beams used for beam training, to implement frequency division beam training and reduce beam training overheads.

With reference to the first aspect or the second aspect, in some implementations of the first aspect or the second aspect, sending the fourth indication information includes: sending the fourth indication information in a frequency domain sub-range corresponding to a fourth beam, where the first device and the second device are in a preset range of a beam direction corresponding to the fourth beam; or separately sending the fourth indication information in a frequency domain sub-range corresponding to a fourth beam and a frequency domain sub-range corresponding to a fifth beam, where the first device is in a preset range of a beam direction corresponding to the fourth beam, the second device is in a preset range of a beam direction corresponding to the fifth beam, and the fourth beam and the fifth beam have different directions; or sending the fourth indication information in a frequency domain range other than the first frequency domain range.

Based on the foregoing technical solution, the first station may send the fourth indication information in different manners, to improve flexibility of the solution.

According to a third aspect, a communication method is provided. The method may be performed by a first station, or may be performed by a component (for example, a chip or a circuit) of a first station. This is not limited.

The communication method includes: sending third indication information, where the third indication information indicates a first device to send a second field used for beam training, a frequency domain range corresponding to the second field includes a third frequency domain sub-range and a fourth frequency domain sub-range, and a direction of a beam sent in the third frequency domain sub-range at a second moment is different from a direction of a beam sent in the fourth frequency domain sub-range at the second moment.

Based on the foregoing technical solution, the first station may indicate, based on the third indication information, the first device to send, in different frequency domain sub-ranges, the second field used for beam training, where directions of beams sent in different frequency domain sub-ranges at at least one moment are different, so that the first device can send, in different frequency domain sub-ranges, beams used for beam training in a frequency division manner, to implement frequency division beam training and reduce beam training overheads.

With reference to the third aspect, in some implementations of the third aspect, the method further includes: sending fourth indication information, where the fourth indication information indicates the first device to send a third field used for beam training and indicates a second device to send a fourth field used for beam training, a frequency domain range corresponding to the third field includes a fifth frequency domain sub-range, a frequency domain range corresponding to the fourth field includes a sixth frequency domain sub-range, and a direction of a beam sent in the fifth frequency domain sub-range at a third moment is different from a direction of a beam sent in the sixth frequency domain sub-range at the third moment.

Based on the foregoing technical solution, the first station may further indicate, based on the fourth indication information, the first device and the second device to separately send, in different frequency domain sub-ranges, fields used for beam training, so that the first device and the second device can send, in different frequency domain sub-ranges, beams used for beam training in a frequency division manner, to implement frequency division beam training between devices and reduce beam training overheads.

According to a fourth aspect, a communication method is provided. The method may be performed by a first station, or may be performed by a component (for example, a chip or a circuit) of a first station. This is not limited.

The communication method includes: sending fourth indication information, where the fourth indication information indicates a first device to send a third field used for beam training and indicates a second device to send a fourth field used for beam training, a frequency domain range corresponding to the third field includes a fifth frequency domain sub-range, a frequency domain range corresponding to the fourth field includes a sixth frequency domain sub-range, and a direction of a beam sent in the fifth frequency domain sub-range at a third moment is different from a direction of a beam sent in the sixth frequency domain sub-range at the third moment.

Based on the foregoing technical solution, the first station may indicate, based on the fourth indication information, the first device and the second device to separately send, in different frequency domain sub-ranges, fields used for beam training, so that the first device and the second device can send, in different frequency domain sub-ranges, beams used for beam training in a frequency division manner, to implement frequency division beam training between devices and reduce beam training overheads.

With reference to the fourth aspect, in some implementations of the fourth aspect, the method further includes: sending third indication information, where the third indication information indicates the first device to send a second field used for beam training, a frequency domain range corresponding to the second field includes a third frequency domain sub-range and a fourth frequency domain sub-range, and a direction of a beam sent in the third frequency domain sub-range at a second moment is different from a direction of a beam sent in the fourth frequency domain sub-range at the second moment.

Based on the foregoing technical solution, the first station may indicate, based on the third indication information, the first device to send, in different frequency domain sub-ranges, the second field used for beam training, where directions of beams sent in different frequency domain sub-ranges at at least one moment are different, so that the first device can send, in different frequency domain sub-ranges, beams used for beam training in a frequency division manner, to implement frequency division beam training and reduce beam training overheads.

With reference to the third aspect or the fourth aspect, in some implementations of the third aspect or the fourth aspect, the method further includes: sending a first physical layer protocol data unit PPDU, where the first PPDU includes a first field used for beam training, a frequency domain range corresponding to the first field includes a first frequency domain sub-range and a second frequency domain sub-range, the first frequency domain sub-range and the second frequency domain sub-range have a non-overlapping part, and a sum of the first frequency domain sub-range and the second frequency domain sub-range is less than or equal to a first frequency domain range corresponding to the first PPDU; and sending a first beam set in the first frequency domain sub-range of the first field, and sending a second beam set in the second frequency domain sub-range of the first field, where a direction of a first beam sent in the first frequency domain sub-range at a first moment is different from a direction of a second beam sent in the second frequency domain sub-range at the first moment, the first beam belongs to the first beam set, and the second beam belongs to the second beam set.

Based on the foregoing technical solution, the first station may trigger, based on the third indication information or the fourth indication information, another device to perform frequency division beam training, and the first station may also send the first beam set in the first frequency domain sub-range of the first field, and send the second beam set in the second frequency domain sub-range of the first field, where directions of beams sent in different frequency domain sub-ranges at at least one moment are different, so that beams used for beam training are sent in different frequency domain sub-ranges in a frequency division manner, to implement frequency division beam training and reduce beam training overheads.

With reference to the third aspect or the fourth aspect, in some implementations of the third aspect or the fourth aspect, the method further includes: sending first indication information, where the first indication information indicates one or more of the following information: a quantity of frequency domain sub-ranges corresponding to the first field, a size of the first frequency domain sub-range, or a size of the second frequency domain sub-range.

Based on the foregoing technical solution, the first station may indicate, based on the first indication information, the quantity of frequency domain ranges that correspond to the first field and that are carried in the first PPDU, and may indicate the size of the first frequency domain sub-range and the size of the second frequency domain sub-range that correspond to the first field. Therefore, a receive end that receives the first PPDU may clearly learn, based on the first indication information, that beams used for beam training that are sent on the first field carried in the first PPDU may be sent in a frequency division manner.

With reference to the first aspect to the fourth aspect, in some implementations of the first aspect to the fourth aspect, a sequence corresponding to the first beam set that is sent on a subcarrier in the first frequency domain sub-range is a first sequence, and the first sequence is a partial sequence that is of a sequence corresponding to the first frequency domain range and that is sent on at least one first subcarrier; and a sequence corresponding to the second beam set that is sent on a subcarrier in the second frequency domain sub-range is a second sequence, and the second sequence is a partial sequence that is of the sequence corresponding to the first frequency domain range and that is sent on at least one second subcarrier.

Based on the foregoing technical solution, the sequence corresponding to the beam set that is sent on the subcarrier in the frequency domain sub-range corresponding to the first field may be determined based on sequences that are sent on different subcarriers and that are of the sequence corresponding to the first frequency domain range, so that sequences corresponding to beam sets sent on subcarriers in different frequency domain sub-ranges can be determined based on a known sequence, to reduce complexity of generating the sequence corresponding to the beam set.

With reference to the first aspect to the fourth aspect, in some implementations of the first aspect to the fourth aspect, a sequence corresponding to the first beam set that is sent on a subcarrier in the first frequency domain sub-range is a first sequence, and the first sequence is a sequence corresponding to the first frequency domain sub-range; and a sequence corresponding to the second beam set that is sent on a subcarrier in the second frequency domain sub-range is a second sequence, and the second sequence is a sequence corresponding to the second frequency domain sub-range.

Based on the foregoing technical solution, the sequence corresponding to the beam set that is sent on the subcarrier in the frequency domain sub-range corresponding to the first field may be determined based on sequences corresponding to different frequency domain sub-ranges, and an existing sequence may be reused, so that complexity of generating the sequence corresponding to the beam set is reduced.

With reference to the first aspect to the fourth aspect, in some implementations of the first aspect to the fourth aspect, the sequence corresponding to the first frequency domain range includes a short training field STF sequence or a long training field LTF sequence for a first bandwidth.

With reference to the first aspect to the fourth aspect, in some implementations of the first aspect to the fourth aspect, a sequence corresponding to the first frequency domain sub-range includes a short training field STF sequence or a long training field LTF sequence for the first frequency domain sub-range.

With reference to the first aspect to the fourth aspect, in some implementations of the first aspect to the fourth aspect, a sequence corresponding to the second frequency domain sub-range includes a short training field STF sequence or a long training field LTF sequence for the second frequency domain sub-range.

With reference to the first aspect to the fourth aspect, in some implementations of the first aspect to the fourth aspect, the first indication information further indicates that there are a plurality of frequency domain sub-ranges in the frequency domain range corresponding to the first field.

With reference to the first aspect to the fourth aspect, in some implementations of the first aspect to the fourth aspect, sending the first beam set in the first frequency domain sub-range, and sending the second beam set in the second frequency domain sub-range includes: separately sending a plurality of beams in the first beam set in a plurality of first time domain ranges in the first frequency domain sub-range, where directions of the plurality of beams in the first beam set are different; and/or separately sending a plurality of beams in the second beam set in a plurality of second time domain ranges in the second frequency domain sub-range, where directions of the plurality of beams in the second beam set are different.

Based on the foregoing technical solution, the first station may separately send the plurality of beams in the first beam set in the plurality of first time domain ranges in the first frequency domain sub-range, and separately send the plurality of beams in the second beam set in the plurality of second time domain ranges in the second frequency domain sub-range. In this way, different beams are sent in different frequency domain sub-ranges in a time division manner, to further reduce beam training overheads.

With reference to the first aspect to the fourth aspect, in some implementations of the first aspect to the fourth aspect, the method further includes: sending second indication information, where the second indication information indicates at least one of the following information: a quantity of first time domain ranges corresponding to the first frequency domain sub-range, configuration information of the first time domain range, a length of a training field in the first time domain range, a quantity of symbols of the training field in the first time domain range, a quantity of second time domain ranges corresponding to the second frequency domain sub-range, configuration information of the second time domain range, a length of a training field in the second time domain range, and a quantity of symbols of the training field in the second time domain range.

Based on the foregoing technical solution, when the first station may send, in different frequency domain sub-ranges, beams used for beam training in a time division manner, the first station may indicate, based on the second indication information, a parameter sent in a time division manner, so that the receive end that receives the first PPDU may clearly learn, based on the second indication information, that beams used for beam training that are sent in different frequency domain sub-ranges on the first field may be sent in a time division manner.

With reference to the first aspect to the fourth aspect, in some implementations of the first aspect to the fourth aspect, the method further includes: receiving a response message, where the response message includes an identifier of a third beam and/or location information of the third beam, and the location information of the third beam indicates a frequency domain range and a time domain range that correspond to the third beam.

Based on the foregoing technical solution, the first station may receive the response message, where the response message includes the identifier of the third beam and/or the location information of the third beam, and the location information indirectly indicates the third beam, so that the first station can determine the third beam based on the identifier of the third beam and/or the location information of the third beam, and may perform communication based on the third beam in a subsequent communication process.

With reference to the first aspect to the fourth aspect, in some implementations of the first aspect to the fourth aspect, the location information of the third beam includes: an identifier of the frequency domain range corresponding to the third beam and an identifier of the time domain range corresponding to the third beam; or a location identifier corresponding to the third beam, where the location identifier is an identifier that corresponds to the third beam and that is in a plurality of location identifiers that are identified in the first field in a chronological order in time domain and an order from a low frequency to a high frequency in frequency domain.

Based on the foregoing technical solution, the location information of the third beam may be two-dimensional identification information including the identifier of the frequency domain range and the identifier of the time domain range, or may be one-dimensional identification information jointly determined based on the location of the frequency domain range and the location of the time domain range. In other words, the location information of the beam may be in different identification forms, to improve flexibility of the solution.

According to a fifth aspect, a communication method is provided. The method may be performed by a second station, or may be performed by a component (for example, a chip or a circuit) of a second station. This is not limited.

The communication method includes: receiving a first physical layer protocol data unit PPDU, where the first PPDU includes a first field used for beam training, a frequency domain range corresponding to the first field includes a first frequency domain sub-range and a second frequency domain sub-range, the first frequency domain sub-range and the second frequency domain sub-range have a non-overlapping part, and a sum of the first frequency domain sub-range and the second frequency domain sub-range is less than or equal to a first frequency domain range corresponding to the first PPDU; and receiving a first beam set in the first frequency domain sub-range of the first field, and receiving a second beam set in the second frequency domain sub-range of the first field, where a direction of a first beam received in the first frequency domain sub-range at a first moment is different from a direction of a second beam received in the second frequency domain sub-range at the first moment, the first beam belongs to the first beam set, and the second beam belongs to the second beam set.

With reference to the fifth aspect, in some implementations of the fifth aspect, the method further includes: receiving first indication information, where the first indication information indicates one or more of the following information: a quantity of frequency domain sub-ranges corresponding to the first field, a size of the first frequency domain sub-range, or a size of the second frequency domain sub-range.

According to a sixth aspect, a communication method is provided. The method may be performed by a second station, or may be performed by a component (for example, a chip or a circuit) of a second station. This is not limited.

The communication method includes: receiving a first physical layer protocol data unit PPDU and first indication information, where the first PPDU includes a first field used for beam training, a frequency domain range corresponding to the first field includes a first frequency domain sub-range and a second frequency domain sub-range, the first indication information indicates a size of the first frequency domain sub-range and a size of the second frequency domain sub-range, the first frequency domain sub-range and the second frequency domain sub-range have a non-overlapping part, and a sum of the first frequency domain sub-range and the second frequency domain sub-range is less than or equal to a first frequency domain range corresponding to the first PPDU.

With reference to the sixth aspect, in some implementations of the sixth aspect, the method further includes: receiving a first beam set in the first frequency domain sub-range of the first field, and receiving a second beam set in the second frequency domain sub-range of the first field, where a direction of a first beam sent in the first frequency domain sub-range at a first moment is different from a direction of a second beam sent in the second frequency domain sub-range at the first moment, the first beam belongs to the first beam set, and the second beam belongs to the second beam set.

According to a seventh aspect, a communication method is provided. The method may be performed by a second station, or may be performed by a component (for example, a chip or a circuit) of a second station. This is not limited.

The communication method includes: receiving third indication information, where the third indication information indicates a first device to send a second field used for beam training, a frequency domain range corresponding to the second field includes a third frequency domain sub-range and a fourth frequency domain sub-range, and a direction of a beam sent in the third frequency domain sub-range at a second moment is different from a direction of a beam sent in the fourth frequency domain sub-range at the second moment.

With reference to the seventh aspect, in some implementations of the seventh aspect, the method further includes: sending a first physical layer protocol data unit PPDU, where the first PPDU includes a first field used for beam training, a frequency domain range corresponding to the first field includes a first frequency domain sub-range and a second frequency domain sub-range, the first frequency domain sub-range and the second frequency domain sub-range have a non-overlapping part, and a sum of the first frequency domain sub-range and the second frequency domain sub-range is less than or equal to a first frequency domain range corresponding to the first PPDU; and sending a first beam set in the first frequency domain sub-range of the first field, and sending a second beam set in the second frequency domain sub-range of the first field, where a direction of a first beam sent in the first frequency domain sub-range at a first moment is different from a direction of a second beam sent in the second frequency domain sub-range at the first moment, the first beam belongs to the first beam set, and the second beam belongs to the second beam set.

With reference to the seventh aspect, in some implementations of the seventh aspect, the method further includes: sending first indication information, where the first indication information indicates one or more of the following information: a quantity of frequency domain sub-ranges corresponding to the first field, a size of the first frequency domain sub-range, or a size of the second frequency domain sub-range.

With reference to the fifth aspect to the seventh aspect, in some implementations of the fifth aspect to the seventh aspect, a sequence corresponding to the first beam set that is sent on a subcarrier in the first frequency domain sub-range is a first sequence, and the first sequence is a partial sequence that is of a sequence corresponding to the first frequency domain range and that is sent on at least one first subcarrier; and a sequence corresponding to the second beam set that is sent on a subcarrier in the second frequency domain sub-range is a second sequence, and the second sequence is a partial sequence that is of the sequence corresponding to the first frequency domain range and that is sent on at least one second subcarrier.

With reference to the fifth aspect to the seventh aspect, in some implementations of the fifth aspect to the seventh aspect, a sequence corresponding to the first beam set that is sent on a subcarrier in the first frequency domain sub-range is a first sequence, and the first sequence is a sequence corresponding to the first frequency domain sub-range; and a sequence corresponding to the second beam set that is sent on a subcarrier in the second frequency domain sub-range is a second sequence, and the second sequence is a sequence corresponding to the second frequency domain sub-range.

With reference to the fifth aspect to the seventh aspect, in some implementations of the fifth aspect to the seventh aspect, the sequence corresponding to the first frequency domain range includes a short training field STF sequence or a long training field LTF sequence for a first bandwidth.

With reference to the fifth aspect to the seventh aspect, in some implementations of the fifth aspect to the seventh aspect, a sequence corresponding to the first frequency domain sub-range includes a short training field STF sequence or a long training field LTF sequence for the first frequency domain sub-range.

With reference to the fifth aspect to the seventh aspect, in some implementations of the fifth aspect to the seventh aspect, a sequence corresponding to the second frequency domain sub-range includes a short training field STF sequence or a long training field LTF sequence for the second frequency domain sub-range.

With reference to the fifth aspect to the seventh aspect, in some implementations of the fifth aspect to the seventh aspect, the first indication information further indicates that there are a plurality of frequency domain sub-ranges in the frequency domain range corresponding to the first field.

With reference to the fifth aspect to the seventh aspect, in some implementations of the fifth aspect to the seventh aspect, receiving the first beam set in the first frequency domain sub-range and receiving the second beam set in the second frequency domain sub-range includes: separately receiving a plurality of beams in the first beam set in a plurality of first time domain ranges in the first frequency domain sub-range, where directions of the plurality of beams in the first beam set are different; and/or separately receiving a plurality of beams in the second beam set in a plurality of second time domain ranges in the second frequency domain sub-range, where directions of the plurality of beams in the second beam set are different.

With reference to the fifth aspect to the seventh aspect, in some implementations of the fifth aspect to the seventh aspect, the method further includes: receiving second indication information, where the second indication information indicates at least one of the following information: a quantity of first time domain ranges corresponding to the first frequency domain sub-range, configuration information of the first time domain range, a length of a training field in the first time domain range, a quantity of symbols of the training field in the first time domain range, a quantity of second time domain ranges corresponding to the second frequency domain sub-range, configuration information of the second time domain range, a length of a training field in the second time domain range, and a quantity of symbols of the training field in the second time domain range.

With reference to the fifth aspect to the seventh aspect, in some implementations of the fifth aspect to the seventh aspect, the method further includes: sending a response message, where the response message includes an identifier of a third beam and/or location information of the third beam, and the location information of the third beam indicates a frequency domain range and a time domain range that correspond to the third beam.

With reference to the fifth aspect to the seventh aspect, in some implementations of the fifth aspect to the seventh aspect, the location information of the third beam includes: an identifier of the frequency domain range corresponding to the third beam and an identifier of the time domain range corresponding to the third beam; or a location identifier corresponding to the third beam, where the location identifier is an identifier that corresponds to the third beam and that is in a plurality of location identifiers that are identified in the first field in a chronological order in time domain and an order from a low frequency to a high frequency in frequency domain.

With reference to the fifth aspect to the seventh aspect, in some implementations of the fifth aspect to the seventh aspect, the method further includes: receiving third indication information, where the third indication information indicates the first device to send a second field used for beam training, a frequency domain range corresponding to the second field includes a third frequency domain sub-range and a fourth frequency domain sub-range, and a direction of a beam sent in the third frequency domain sub-range at a second moment is different from a direction of a beam sent in the fourth frequency domain sub-range at the second moment.

For technical effects of the method shown in the fifth aspect to the seventh aspect and the possible designs of the fifth aspect to the seventh aspect, refer to the technical effects in the first aspect to the fourth aspect and the possible designs of the first aspect to the fourth aspect.

According to an eighth aspect, a communication apparatus is provided. The apparatus is configured to perform the method according to the first aspect to the fourth aspect. Specifically, the communication apparatus may include units and/or modules configured to perform the method according to any one of the foregoing implementations of the first aspect to the fourth aspect, for example, a processing unit and an obtaining unit.

In an implementation, a transceiver unit may be a transceiver or an input/output interface, and the processing unit may be at least one processor. Optionally, the transceiver may be a transceiver circuit. Optionally, the input/output interface may be an input/output circuit.

In another implementation, a transceiver unit may be an input/output interface, an interface circuit, an output circuit, an input circuit, a pin, a related circuit, or the like on a chip, a chip system, or a circuit; and the processing unit may be at least one processor, a processing circuit, a logic circuit, or the like.

For example, if the communication apparatus is the first station or the component (for example, a chip or a circuit) of the first station, the communication apparatus includes:
a transceiver unit, configured to send a first physical layer protocol data unit PPDU, where the first PPDU includes a first field used for beam training, a frequency domain range corresponding to the first field includes a first frequency domain sub-range and a second frequency domain sub-range, the first frequency domain sub-range and the second frequency domain sub-range have a non-overlapping part, and a sum of the first frequency domain sub-range and the second frequency domain sub-range is less than or equal to a first frequency domain range corresponding to the first PPDU. The transceiver unit is further configured to: send a first beam set in the first frequency domain sub-range of the first field, and send a second beam set in the second frequency domain sub-range of the first field, where a direction of a first beam sent in the first frequency domain sub-range at a first moment is different from a direction of a second beam sent in the second frequency domain sub-range at the first moment, the first beam belongs to the first beam set, and the second beam belongs to the second beam set.

Optionally, the transceiver unit is further configured to send first indication information, where the first indication information indicates one or more of the following information: a quantity of frequency domain sub-ranges corresponding to the first field, a size of the first frequency domain sub-range, or a size of the second frequency domain sub-range.

Optionally, the transceiver unit is further configured to send third indication information, where the third indication information indicates a first device to send a second field used for beam training, a frequency domain range corresponding to the second field includes a third frequency domain sub-range and a fourth frequency domain sub-range, and a direction of a beam sent in the third frequency domain sub-range at a second moment is different from a direction of a beam sent in the fourth frequency domain sub-range at the second moment.

Optionally, the transceiver unit is further configured to send fourth indication information, where the fourth indication information indicates a first device to send a third field used for beam training and indicates a second device to send a fourth field used for beam training, a frequency domain range corresponding to the third field includes a fifth frequency domain sub-range, a frequency domain range corresponding to the fourth field includes a sixth frequency domain sub-range, and a direction of a beam sent in the fifth frequency domain sub-range at a third moment is different from a direction of a beam sent in the sixth frequency domain sub-range at the third moment.

Optionally, the transceiver unit is further configured to send second indication information, where the second indication information indicates at least one of the following information: a quantity of first time domain ranges corresponding to the first frequency domain sub-range, configuration information of the first time domain range, a length of a training field in the first time domain range, a quantity of symbols of the training field in the first time domain range, a quantity of second time domain ranges corresponding to the second frequency domain sub-range, configuration information of the second time domain range, a length of a training field in the second time domain range, and a quantity of symbols of the training field in the second time domain range.

Optionally, the transceiver unit is further configured to receive a response message, where the response message includes an identifier of a third beam and/or location information of the third beam, and the location information of the third beam indicates a frequency domain range and a time domain range that correspond to the third beam.

For example, if the communication apparatus is the second station or the component (for example, a chip or a circuit) of the second station, the communication apparatus includes:
a transceiver unit, configured to receive a first physical layer protocol data unit PPDU, where the first PPDU includes a first field used for beam training, a frequency domain range corresponding to the first field includes a first frequency domain sub-range and a second frequency domain sub-range, the first frequency domain sub-range and the second frequency domain sub-range have a non-overlapping part, and a sum of the first frequency domain sub-range and the second frequency domain sub-range is less than or equal to a first frequency domain range corresponding to the first PPDU. The transceiver unit is further configured to: receive a first beam set in the first frequency domain sub-range of the first field, and receive a second beam set in the second frequency domain sub-range of the first field, where a direction of a first beam received in the first frequency domain sub-range at a first moment is different from a direction of a second beam received in the second frequency domain sub-range at the first moment, the first beam belongs to the first beam set, and the second beam belongs to the second beam set.

Optionally, the transceiver unit is further configured to receive first indication information, where the first indication information indicates one or more of the following information: a quantity of frequency domain sub-ranges corresponding to the first field, a size of the first frequency domain sub-range, or a size of the second frequency domain sub-range.

Optionally, the transceiver unit is further configured to receive third indication information, where the third indication information indicates a first device to send a second field used for beam training, a frequency domain range corresponding to the second field includes a third frequency domain sub-range and a fourth frequency domain sub-range, and a direction of a beam sent in the third frequency domain sub-range at a second moment is different from a direction of a beam sent in the fourth frequency domain sub-range at the second moment.

Optionally, the transceiver unit is further configured to receive fourth indication information, where the fourth indication information indicates a first device to send a third field used for beam training and indicates a second device to send a fourth field used for beam training, a frequency domain range corresponding to the third field includes a fifth frequency domain sub-range, a frequency domain range corresponding to the fourth field includes a sixth frequency domain sub-range, and a direction of a beam sent in the fifth frequency domain sub-range at a third moment is different from a direction of a beam sent in the sixth frequency domain sub-range at the third moment.

Optionally, the transceiver unit is further configured to receive second indication information, where the second indication information indicates at least one of the following information: a quantity of first time domain ranges corresponding to the first frequency domain sub-range, configuration information of the first time domain range, a length of a training field in the first time domain range, a quantity of symbols of the training field in the first time domain range, a quantity of second time domain ranges corresponding to the second frequency domain sub-range, configuration information of the second time domain range, a length of a training field in the second time domain range, and a quantity of symbols of the training field in the second time domain range.

Optionally, the transceiver unit is further configured to send a response message, where the response message includes an identifier of a third beam and/or location information of the third beam, and the location information of the third beam indicates a frequency domain range and a time domain range that correspond to the third beam.

According to a ninth aspect, this application provides a processor, configured to perform the methods according to the foregoing aspects.

Unless otherwise specified, or if operations such as sending and obtaining/receiving related to the processor do not conflict with actual functions or internal logic of the operations in related descriptions, the operations may be understood as operations such as outputting, receiving, and inputting of the processor, or may be understood as sending and receiving operations performed by a radio frequency circuit and an antenna. This is not limited in this application.

According to a tenth aspect, a computer-readable storage medium is provided. The computer-readable storage medium stores program code to be executed by a device. The program code includes instructions used to perform the method according to any one of the implementations of the first aspect to the fourth aspect.

According to an eleventh aspect, a computer program product including instructions is provided. When the computer program product runs on a computer, the computer is enabled to perform the method according to any one of the implementations of the first aspect to the fourth aspect.

According to a twelfth aspect, a chip is provided. The chip includes a processor and a communication interface, and the processor reads, through the communication interface, instructions stored in a memory, to perform the method according to any one of the implementations of the first aspect to the fourth aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method according to any one of the implementations of the first aspect to the seventh aspect.

According to a thirteenth aspect, a communication system is provided, including the communication apparatus according to the eighth aspect.

### BRIEF DESCRIPTION OF DRAWINGS

FIG. 1 is a diagram of an application scenario to which an embodiment of this application is applicable;
FIG. 2 is a diagram of a structure of an apparatus according to an embodiment of this application;
FIG. 3 is a diagram of a PPDU format;
FIG. 4 is a diagram of a structure of a beacon interval BI;
FIG. 5 is a diagram of time division beamforming training;
FIG. 6 is a schematic flowchart of a communication method according to an embodiment of this application;
FIG. 7 is a diagram of a first PPDU according to an embodiment of this application;
FIG. 8A and FIG. 8B are diagrams of another first PPDU according to an embodiment of this application;
FIG. 9A and FIG. 9B are diagrams of division manners of frequency domain sub-ranges according to an embodiment of this application;
FIG. 10A and FIG. 10B are diagrams of sequences according to an embodiment of this application;
FIG. 11A and FIG. 11B are diagrams of beam location information according to an embodiment of this application;
FIG. 12 is a schematic flowchart of a communication method according to an embodiment of this application;
FIG. 13A to FIG. 13D are diagrams of trigger information according to an embodiment of this application;
FIG. 14 is a block diagram of a communication apparatus according to an embodiment of this application;
FIG. 15 is a diagram of another communication apparatus according to an embodiment of this application; and
FIG. 16 is a diagram of a chip system according to an embodiment of this application.

### DESCRIPTION OF EMBODIMENTS

For ease of understanding embodiments of this application, the following descriptions are provided first.

First, in this application, "indicate" may include "directly indicate" and "indirectly indicate". When a piece of indication information is described as indicating A, the indication information may directly indicate A or indirectly indicate A, but it does not necessarily indicate that the indication information carries A.

The information indicated by the indication information is referred to as to-be-indicated information. In a specific implementation process, the to-be-indicated information may be indicated in a plurality of manners. For example, the to-be-indicated information may be directly indicated, for example, the to-be-indicated information or an index of the to-be-indicated information. Alternatively, the to-be-indicated information may be indirectly indicated by indicating other information, and there is an association relationship between the other information and the to-be-indicated information Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may further be identified and indicated in a unified manner, to reduce indication overheads caused by separately indicating same information.

Second, "at least one" shown in this application means one or more, and "a plurality of" means two or more. In addition, in embodiments of this application, "first", "second", and various numeric numbers (for example, "#1" and "#2") are merely used for distinguishing for ease of description, and are not used to limit the scope of embodiments of this application. Sequence numbers in the following processes do not mean an execution sequence. The execution sequence of the processes should be determined based on functions and internal logic of the processes, and should not constitute any limitation on implementation processes of embodiments of this application. It should be understood that objects described in this way may be interchangeable in proper cases, so that solutions other than embodiments of this application can be described. In addition, in embodiments of this application, words such as "S610" are merely identifiers for ease of description, and do not limit a sequence of performing steps.

Third, in embodiments of this application, words such as "example" or "for example" are used to give an example, an illustration, or a description. Any embodiment or design scheme described as an "example" or "for example" in this application should not be explained as being more preferred or having more advantages than another embodiment or design scheme. Exactly, use of the term such as "example" or "for example" is intended to present a related concept in a specific manner.

Fourth, "store" in embodiments of this application may be "stored in one or more memories". The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in this application.

Fifth, in embodiments of this application, a "protocol" may be a standard protocol in the communication field, for example, may include an NR protocol and a related protocol applied to a further communication system. This is not limited in this application.

Sixth, in embodiments of this application, "of (of)", "corresponding/relevant (corresponding/relevant)", "corresponding (corresponding)", and "associated (associated)" may sometimes be used interchangeably. It should be noted that expressed meanings are consistent when no difference between the terms is emphasized.

Seventh, in embodiments of this application, "in a case of", "when", and "if" may be used interchangeably sometimes. It should be noted that, when a difference between the terms is not emphasized, meanings to be expressed are consistent.

Eighth, a term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

The following describes technical solutions of this application with reference to accompanying drawings.

The technical solutions provided in embodiments of this application may be applied to a wireless local area network (wireless local area network, WLAN) scenario, for example, support 802.11 related standards of the Institute of Electrical and Electronics Engineers (institute of electrical and electronics engineers, IEEE), for example, the 802.11a/b/g standard, the 802.11n standard, the 802.11ac standard, the 802.11ax standard, or next-generation Wi-Fi protocols of IEEE 802.11ax, for example, 802.11be, Wi-Fi 7, extremely high throughput (extremely high throughput, EHT), 802.11ad, 802.11ay, or 802.11bf, or next-generation protocols of 802.11be, or Wi-Fi 8; or may be further applied to a wireless personal area network system based on ultra wide band (ultra wide band, UWB), for example, the 802.15 series standard; or may be further applied to a sensing (sensing) system, for example, the 802.11bf series standard; or may be further applied to the 802.11bn standard or an ultra-high reliability (ultra-high reliability, UHR) standard. The 802.11n standard is referred to as high throughput (high throughput, HT), the 802.11ac standard is referred to as a very high throughput (very high throughput, VHT) standard, the 802.11ax standard is referred to as a high efficiency (high efficiency, HE) standard, and the 802.11be standard is referred to as an extremely high throughput (extremely high throughput, EHT) standard. 802.11bf includes two major categories of standards: a low-frequency (for example, sub-7 GHz) standard and a high-frequency (for example, 60 GHz) standard. An implementation of sub-7 GHz mainly depends on 802.11ac, 802.11ax, 802.11be, and a next-generation standard. An implementation of 60 GHz mainly depends on 802.11ad, 802.11ay, and a next-generation standard. 802.11ad may also be referred to as a directional multi-gigabit (directional multi-gigabit, DMG) standard, and 802.11ay may also be referred to as an enhanced directional multi-gigabit (enhanced directional multi-gigabit, EDMG) standard.

Although embodiments of this application are mainly described by using an example in which a WLAN network is deployed, especially a network to which the IEEE 802.11 system standards are applied, a person skilled in the art easily understands that various aspects in embodiments of this application may be extended to other networks that use various standards or protocols, for example, a high performance radio local area network (high performance radio local area network, HIPERLAN), a wireless wide area network (wireless wide area network, WWAN), a wireless personal area network (wireless personal area network, WPAN), or other networks that are known or developed in the future. Therefore, regardless of used coverage and a used wireless access protocol, the various aspects provided in embodiments of this application are applicable to any appropriate wireless network.

The technical solutions in embodiments of this application may be further applied to various communication systems, for example, a WLAN communication system, a wireless fidelity (wireless fidelity, Wi-Fi) system, a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) system or new radio (new radio, NR), a 6th generation (6th generation, 6G) system, an internet of things (internet of things, IoT) network, or vehicle-to-everything (vehicle to x, V2X).

The foregoing communication systems to which this application is applicable are merely examples for description, and the communication systems to which this application is applicable are not limited thereto. Unified descriptions are provided herein, and are not described below again.

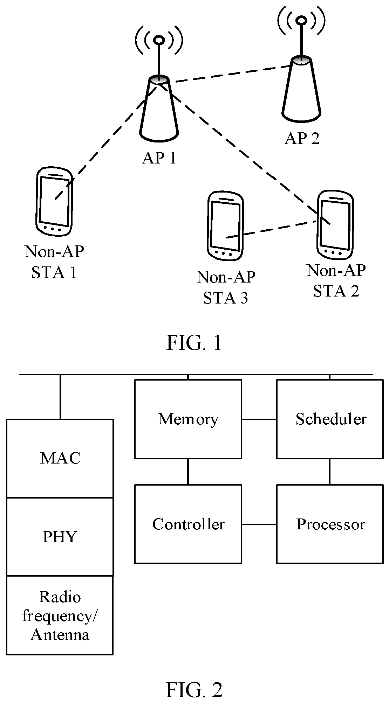

FIG. 1 is a diagram of an application scenario to which an embodiment of this application is applicable. As shown in FIG. 1, a communication method provided in this application is applicable to data communication between an access point (access point, AP) and a station (station, STA). The station may be a non-access point station (non-access point station, non-AP STA), which is briefly referred to as a non-AP station or a STA. Specifically, the solutions of this application are applicable to data communication between an AP and one or more non-AP stations (for example, data communication between an AP 1, and a non-AP STA 1 and a non-AP STA 2), and are also applicable to data communication between APs (for example, data communication between the AP 1 and an AP 2) and data communication between non-AP STAs (for example, data communication between the non-AP STA 2 and a non-AP STA 3).

The access point may be a node through which a terminal (for example, a mobile phone) accesses a wired (or wireless) network, and is mainly deployed at home, in a building, or on a campus, with a typical coverage radius ranging from tens of meters to more than 100 meters, or certainly, may be deployed outdoors. The access point is equivalent to a bridge that connects a wired network and a wireless network, and is mainly used to connect various wireless network clients together and then connect the wireless network to the Ethernet.

Specifically, the access point may be a terminal or a network device with a Wi-Fi chip. The network device may be a server, a router, a switch, a bridge, a computer, a mobile phone, a relay station, a vehicle-mounted device, a wearable device, a network device in a 5G network, a network device in a 6G network, a network device in a public land mobile network (public land mobile network, PLMN), or the like. This is not limited in embodiments of this application. The access point may be a device that supports a Wi-Fi standard. For example, the access point may alternatively support one or more of the following IEEE 802.11 series standards: 802.11a, 802.11b, 802.11g, 802.11n, 802.11ac, 802.11ax, 802.11be, 802.11ad, 802.11ay, and 802.11bn.

The non-AP station may be a wireless communication chip, a wireless sensor, a wireless communication terminal, or the like, and may also be referred to as a user, user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The non-AP station may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, an internet of things device, a wearable device, a terminal device in a 5G network, a terminal device in a 6G network, a terminal device in a PLMN, or the like. This is not limited in embodiments of this application. The non-AP station may be a device that supports a WLAN standard. For example, the non-AP station may support one or more of the following IEEE 802.11 series standards: 802.11a, 802.11b, 802.11g, 802.11n, 802.11ac, 802.11ax, 802.11be, 802.11ad, and 802.11ay.

For example, the non-AP station may be a mobile phone, a tablet computer, a set-top box, a smart television, a smart wearable device, a vehicle-mounted communication device, a computer, an internet of things (internet of things, IoT) node, a sensor, a smart home device like a smart camera, a smart remote control, or a smart water/electricity meter, or a sensor in a smart city.

The AP or the non-AP station may include a transmitter, a receiver, a memory, a processor, and the like. The transmitter and the receiver are respectively configured to send and receive packet structures. The memory is configured to store signaling information, store a preset value agreed in advance, and the like. The processor is configured to parse the signaling information, process related data, and the like.

For example, FIG. 2 shows a communication apparatus according to this application. The apparatus shown in FIG. 2 may be an AP or a non-AP station. A medium access control (medium access control, MAC) layer processing module, a physical (physical, PHY) layer processing module, radio frequency/an antenna, and the like are configured to implement related functions of the foregoing transmitter and receiver. As shown in FIG. 2, in addition to the MAC layer processing module, the PHY layer processing module, the radio frequency/antenna, a memory, and a processor, the apparatus may further include a controller and a scheduler.

It should be understood that FIG. 2 shows merely an example of an apparatus according to this application, and does not constitute limitation on this application. For example, the apparatus may alternatively not include the controller and/or the scheduler.

For ease of understanding of the technical solutions in embodiments of this application, some terms or concepts that may be used in embodiments of this application are first briefly described.

1. Directional communication: A WLAN has been developed for many generations, including standards below 7 GHz, such as 802.11a/b/g, 802.11n, 802.11ac, 802.11ax, 802.11be, and 802.11bn, and further including high-frequency standards (standards of 45 GHz and above), such as the 802.11ad standard, the 802.11ay standard, and a to-be-formulated integrated millimeter wave standard (Integrated mmWave standard) that operate near 60 GHz.

In high-frequency communication, due to characteristics such as a large path loss of a channel, at least one device usually needs to use directional (directional) communication when two devices communicate with each other. In other words, a "directional + directional" or "directional + omnidirectional" communication mode is usually used between devices.

Due to directionality in millimeter wave communication, beam calibration training in a sending direction and/or a receiving direction needs to be first performed during communication. In a conventional beam training manner, beam training in a sending direction or a receiving direction is generally performed in a time division manner. The following briefly describes specific content of a PPDU based on an orthogonal frequency division multiplexing (Orthogonal Frequency Division Multiplexing, OFDM) technology that is currently considered in an integrated millimeter wave standard.

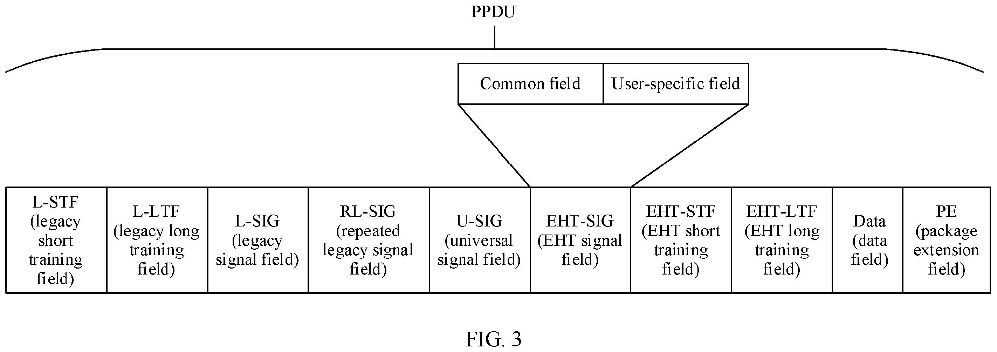

2. Low-frequency physical layer protocol data unit (physical protocol data unit, PPDU): Currently, a WLAN has many low-frequency standards, such as 802.11a/b/g, 802.11n, 802.11ac, 802.11ax, and 802.11be. Different from that a single-carrier preamble is used as a start part of a PPDU in an existing high-frequency standard of a WLAN (a data part may be a single-carrier mode or may be an OFDM mode), a continuously evolving WLAN low-frequency PPDU format basically uses a head-to-tail OFDM modulation scheme. FIG. 3 is a diagram of a low-frequency PPDU format based on an OFDM format. The PPDU includes any one or more of the following information: a legacy short training field (Legacy Short Training Field, L-STF), a legacy long training field (Legacy Long Training Field, L-LTF), a legacy signal field (Legacy Signal Field, L-SIG), a repeated legacy signal field (repeated legacy signal field, RL-SIG), a universal signal field (universal SIG, U-SIG), an ultra-high throughput signal field or extremely high throughput signal field (extremely high throughput, EHT-SIG), an EHT short training field (EHT short training field, EHT-STF), an EHT long training field (EHT long training field, EHT-LTF), a data (Data) field, and a package extension (package extension, PE) field. One or more of the L-STF, the L-LTF, the L-SIG, the RL-SIG, the U-SIG, the EHT-SIG, the EHT-STF, and the EHT-LTF may be a partial structure in a physical layer header (or referred to as a preamble part) of the PPDU.

The L-STF, the L-LTF, and the L-SIG may be understood as legacy preamble fields, and are used to ensure coexistence of a new device and a legacy device. The RL-SIG is used to enhance reliability of a legacy signal field.

The U-SIG and the EHT-SIG are signal fields. The U-SIG is used to carry some common information, for example, information indicating a PPDU version, information indicating uplink/downlink, information indicating a frequency domain bandwidth of the PPDU, and puncturing indication information. The EHT-SIG includes information indicating resource allocation, information indicating data demodulation, and the like.

It should be noted that, in FIG. 3, a field in a PPDU in an 802.11be scenario is used as an example for description. The protection scope of this application is not limited. For example, a PPDU in a low-frequency standard may further include a VHT PPDU in an OFDM format in 802.11ac (VHT). For another example, a UHR PPDU in 802.11bn (UHR) may be further included.

It can be learned from the foregoing that, the PPDU in the low-frequency standard includes a conventional preamble (including an L-SIG, an L-LTF, and an L-SIG), a new-generation preamble (like a U-SIG, an EHT-STF, and an EHT-LTF), a data field (Data), and the like.

3. A PPDU with an increased subcarrier spacing is also referred to as a PPDU of an upclocking (upclocking) version. Upclocking is to shorten an interval between sending points. When a quantity of sending points remains unchanged, a periodicity corresponding to a same point is shortened. Because the periodicity is in a reciprocal relationship with the subcarrier spacing, the subcarrier spacing is increased.

For example, a VHT PPDU may be transmitted on 20 MHz, 40 MHz, 80 MHz, and 160 MHz, a subcarrier spacing is 312.5 kHz, a symbol periodicity is 3.2 microseconds, each 20 MHz corresponds to 64 points, and an interval of each point is 0.05 microseconds. When 4x upclocking and 8x upclocking are used, a PPDU of an upclocking version of 802.11ac is shown in first two columns in Table 1 (a subcarrier spacing is increased, and a periodicity corresponding to a same quantity of sent points is shortened).

802.11be is shown in a third column (16x upclocking) in Table 1 and is similar to 802.11ac, except that a subcarrier spacing in the EHT-STF and a subsequent field like a data field changes to 78.125 kHz, corresponding to 256 points in every 20 MHz (1.25 MHz in the third column = 78.125 kHz x 16).

**Table 1:**

| | 4x 802.11ac | 8x 802.11ac | 16x 802.11be |
|---|---|---|---|
| Bandwidth | 80/160/320/640 MHz | 160/320/640/1280 MHz | 320/640/1280/2560/5120 MHz |
| Subcarrier spacing | 1.25 MHz | 2.5 MHz | 1.25 MHz |
| IDFT/DFT periodicity | 800 ns | 400 ns | 800 ns |
| IDFT/DFT size | 64/128/256/512 | 64/128/256/512 | 256/512/1024/2048/4096 |

Because an increase in the subcarrier spacing has a characteristic of reducing impact caused by a phase noise, a carrier frequency offset, and the like, in a high frequency, a PPDU with a larger OFDM-based subcarrier spacing is considered to be used and a PPDU of an upclocking version based on a low-frequency format is also considered to be used in the IMMW standard.

4. Sector-level sweep (sector-level sweep, SLS) phase: Specifically, the SLS phase mainly includes the following four parts:
an initiator sector sweep (initiator sector sweep, ISS) phase, used to train a directional transmit beam of an initiator, where the initiator directionally sends training data on a beam of a specific width, and a responder receives the training data in a quasi-omnidirectional mode;
a responder sector sweep (responder sector sweep, RSS) phase, used to train a directional transmit beam of the responder, where the responder directionally sends training data on a beam of a specific width, and the training data includes optimal transmit sector information of the initiator in a previous phase; and in this case, the initiator receives the training data in a quasi-omnidirectional manner;
a sector sweep feedback (sector sweep feedback, SSW-Feedback) phase, where feedback information is a list of initiator transmit sectors that are sorted based on sector quality and includes an optimal sector of the responder in the previous phase, and in this case, the responder is in a quasi-omnidirectional receiving mode; and
a sector sweep acknowledgment (sector sweep acknowledgment, SSW-ACK) phase, where when SLS is performed before a data transmission interval (data transmission interval, DTI) phase, the SSW-ACK phase may not exist, and when SLS is performed in the DTI phase, the SSW-ACK phase is required; and in the SSW-ACK phase, the responder feeds back a list of responder transmit sectors that are sorted based on quality.

It should be understood that an omnidirectional antenna is used by a device to perform omnidirectional sending or omnidirectional receiving. The omnidirectional antenna radiates evenly at 360° in a horizontal direction, that is, has no directivity, and has a beam with a specific width in a vertical direction. Usually, a smaller lobe width indicates a larger gain. The omnidirectional antenna has large coverage, and is usually used in a large-area station in a suburban area in a communication system. Correspondingly, a directional antenna is used by the device to perform directional sending or directional receiving, and radiates within a specific angle range in a horizontal direction, that is, has directivity. For the directional antenna similar to the omnidirectional antenna, a smaller lobe width indicates a larger gain. The directional antenna is usually used in an environment of a long communication distance, small coverage, a high target density, and high frequency usage in the communication system.

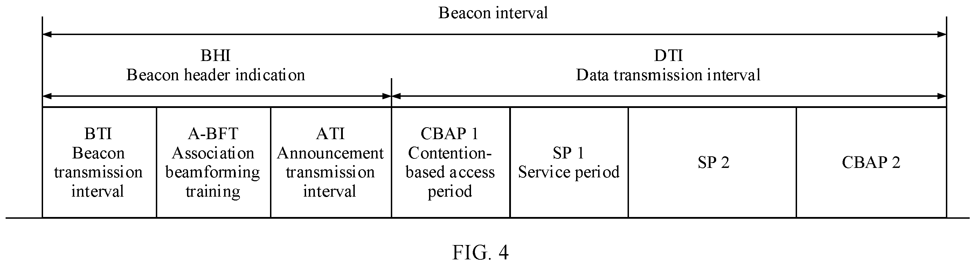

5. Time division beam training: In 802.11ad/ay, a time axis is divided into beacon intervals (beacon interval, BI). FIG. 4 is a diagram of a structure of a beacon interval BI. As shown in FIG. 4, the beacon interval is divided into a beacon header indication (beacon header indication, BHI) and a data transmission interval (data transmission interval, DTI). The BHI further includes a beacon transmission interval (beacon transmission interval, BTI), association beamforming training (association beamforming training, A-BFT), and an announcement transmission interval (announcement transmission interval, ATI).

Specifically, a personal basic service set control point (personal basic service set (PBSS) control point, PCP) or an AP sends a plurality of beacon (beacon) frames in the BTI based on a sector number. The beacon frames are used for downlink sector sweep. A-BFT is used by a STA for association and uplink sector sweep. An ATI is used by the PCP/AP to poll the STA for buffered data information and allocate a resource in the data transmission interval (data transmission interval, DTI) to the STA. The entire DTI is divided into several subintervals, and the subintervals are divided into a contention-based access period (contention-based access period, CBAP) and a service period (service period, SP) in an access manner. In the service period, scheduling transmission is performed without contention.

It should be noted that, in 802.11ad and 802.11ay, the PCP is allowed to communicate with the STA, and behavior corresponding to the PCP is similar to that of the AP. Therefore, if no description is provided, it may be considered that the content of the AP in this application is also applicable to the design of the PCP.

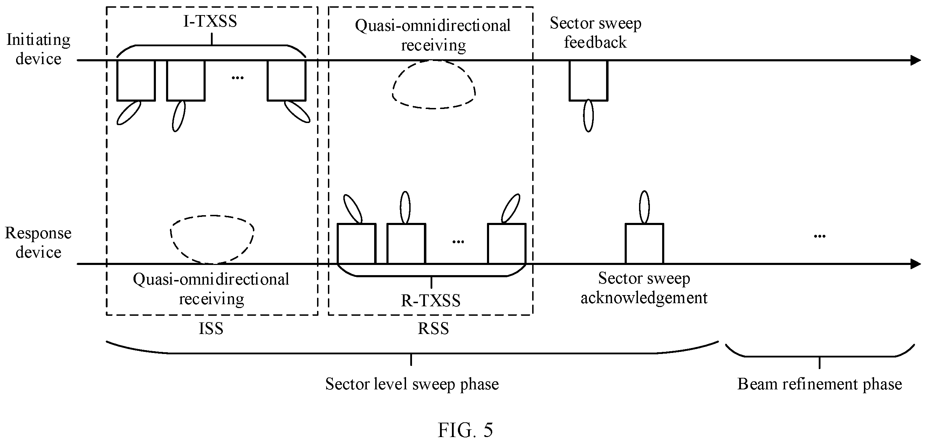

For ease of understanding, a high-frequency time division beamforming training procedure is described in detail with reference to FIG. 5.

FIG. 5 is a diagram of time division beamforming training. A procedure shown in FIG. 5 may enable two devices to complete respective beam training at a transmit end and a receive end. High-frequency beamforming training starts from an SLS phase initiated by an initiating device (initiator) (as shown in FIG. 5). The SLS phase is used to enable two devices to meet at least a high-robustness and low-rate communication requirement. Generally, only beamforming training (I-TXSS or R-TXSS, that is, transmit sector sweep or responder receive sector sweep) of the transmit end is provided in the SLS phase.

After the SLS phase, a BRP (beam refinement protocol) phase may exist if required by the initiator or responder. A purpose of the BRP phase is to provide training at the receive end and beam refinement (or referred to as AWV refinement, where the AWV means an antenna weight vector, and the antenna weight vector is a vector of weights describing the excitation (amplitude and phase) for each element of an antenna array) at the transmit end and the receive end. The BRP phase includes but is not limited to: beam refinement protocol establishment, multi-sector ID detection, sector combination, beam refinement processing, and the like.

In the foregoing manner, the two devices obtain, from each other, optimal transmit beams that can communicate with the peer device. However, it should be noted that only training of a transmit beam is generally completed in the SLS, but training of a receive beam direction of the receive end is not completed. Therefore, only a basic communication requirement can be met.

It should be understood that the SLS phase may occur in the DTI phase, or may occur in the BTI and A-BFT phases. When the SLS occurs in the BTI and A-BFT phases, the sector sweep acknowledgment process in the SLS shown in the preceding figure does not exist.

It may be learned that the beam training is a time division process. To be specific, a transmit beam in a time period 1 corresponds to a direction 1, and a transmit beam in a time period 2 corresponds to a direction 2. In addition, a receive beam is also in the time division manner. To be specific, when a receive beam is trained, a receive beam in a time period 3 corresponds to a direction 3, and a receive beam in a time period 4 corresponds to a direction 4.

With reference to FIG. 1, the foregoing briefly describes a scenario to which the communication method provided in embodiments of this application can be applied, describes basic concepts that may be used in embodiments of this application, and describes time division beam training in the basic concepts. It can be learned from the foregoing description of time division beam training that in the time division beam training process, frequency resources are not fully used to reduce training overheads, and consequently, beam training overheads are high.

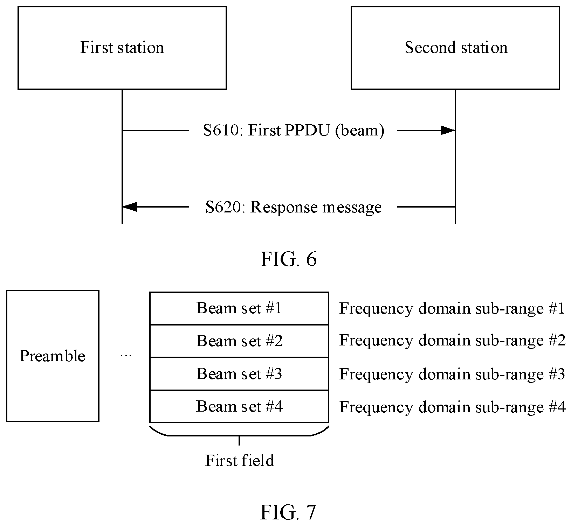

This application provides a communication method, to reduce beam training overheads. The following describes the communication method in detail with reference to FIG. 6.

The following describes the technical solutions provided in this application in detail with reference to accompanying drawings. Embodiments of this application may be applied to a plurality of different scenarios, including but not limited to the scenario shown in FIG. 1.

It should be understood that a specific structure of an execution body of the method provided in embodiments of this application is not particularly limited in the following embodiments, provided that a program that records code of the method provided in embodiments of this application can be run to perform communication according to the method provided in embodiments of this application. For example, the execution body of the method provided in embodiments of this application may be a receive end device or a transmit end device, or a functional module that is in the receive end device or the transmit end device and that can invoke the program and execute the program.

Without loss of generality, the following describes in detail the communication method provided in embodiments of this application by using interaction between a first station and a second station as an example. In embodiments of this application, the first station may be an access point AP, and the second station may be a non-access point non-AP (for example, a STA). Alternatively, the first station may be an access point STA, and the second station may be a non-access point AP. Alternatively, the first station and the second station are access points APs. Alternatively, the first station and the second station are non-access points non-APs.

FIG. 6 is a schematic flowchart of a communication method according to an embodiment of this application. The following steps are included.

S610: A first station sends a first PPDU to a second station, and correspondingly, the second station receives the first PPDU from the first station.

It should be understood that, in this embodiment, the first station may send the first PPDU to a plurality of second stations. In other words, there may be a plurality of receive end devices that receive the first PPDU. For ease of description, in this embodiment, an example in which the first station sends the first PPDU to a second station is used for description.

Specifically, the first PPDU includes a first field used for beam training, a frequency domain range corresponding to the first field includes a first frequency domain sub-range and a second frequency domain sub-range, the first frequency domain sub-range and the second frequency domain sub-range have a non-overlapping part, and a sum of the first frequency domain sub-range and the second frequency domain sub-range is less than or equal to a first frequency domain range corresponding to the first PPDU.

For example, that the first frequency domain sub-range and the second frequency domain sub-range have the non-overlapping part includes: The first frequency domain sub-range and the second frequency domain sub-range do not overlap at all, or there is no intersection between the first frequency domain sub-range and the second frequency domain sub-range, or the first frequency domain sub-range and the second frequency domain sub-range partially overlap.

For example, a frequency domain range corresponding to the first PPDU is 80 MHz bandwidth, the first frequency domain sub-range is a frequency domain range greater than or equal to 0 MHz and less than or equal to 20 MHz, and the second frequency domain sub-range is a frequency domain range greater than or equal to 21 MHz and less than or equal to 40 MHz. Alternatively, for another example, the first frequency domain sub-range is a frequency domain range greater than or equal to 0 MHz and less than or equal to 20 MHz, and the second frequency domain sub-range is a frequency domain range greater than or equal to 10 MHz and less than or equal to 40 MHz.

The first field is a time domain range in time domain. For example, the first field is a training field. A name of the first field is not limited in this embodiment. A time domain range used to carry a beam may be referred to as a first field. For example, the first field may be referred to as a beam training field, a training field, or a sector training field. The frequency domain range corresponding to the first field may be a frequency domain range that is in frequency domain and that is divided by the first field, or a frequency domain range that is in frequency domain and that is carried by the first field.

It should be understood that the first station may send a beam to the second station via the first PPDU, to implement beam training. Specifically, the first station sends a first beam set in the first frequency domain sub-range of the first field, and sends a second beam set in the second frequency domain sub-range of the first field, where a direction of a first beam sent in the first frequency domain sub-range at a first moment is different from a direction of a second beam sent in the second frequency domain sub-range at the first moment, the first beam belongs to the first beam set, and the second beam belongs to the second beam set.

For example, the first moment may be any moment in the first field. To be specific, in the time domain range indicated by the first field, directions of beams sent in the first frequency domain sub-range and the second frequency domain sub-range at one moment are different.

In this embodiment, the first station may send the first beam set in the first frequency domain sub-range of the first field, and send the second beam set in the second frequency domain sub-range of the first field, where directions of beams sent in different frequency domain sub-ranges at at least one moment are different, so that beams used for beam training are sent in different frequency domain sub-ranges in a frequency division manner, to implement frequency division beam training and reduce beam training overheads.

It should be understood that a specific sending manner of beam sets of the first station in different frequency domain sub-ranges is not limited in this embodiment. For example, the first station may send, in each frequency domain sub-range, the beam sets by using a number of IFFT points in the entire first frequency domain range corresponding to the first PPDU. In this case, this sending manner may be understood as a special SU-MIMO (constellation points carried on some subcarriers are at an origin). For another example, the first station may send the beam sets in a dual-carrier manner. A beam sending manner is not limited in this embodiment. For example, beam sending may be performed in a manner like analog beamforming, hybrid beamforming, or digital beamforming.

In addition, a manner of sending another field in the first PPDU is not limited in this embodiment. For example, a preamble, a data field, or the like in the first PPDU may also be sent in the frequency division manner, to implement beam tracking, multi-user communication, or multi-user frequency division training. It should be understood that, in this embodiment, the frequency division manner corresponding to the first field used for beam training is mainly described, and another frequency division sending solution (for example, frequency division sending is also performed on another field, or frequency division sending is not performed on the first field, and frequency division sending is performed on another field (for example, a preamble or a data field)) is not described in detail.

For ease of understanding, a possible format of the first PPDU sent by the first station in this embodiment is described in detail with reference to FIG. 7.

It can be learned from FIG. 7 that the first PPDU includes a preamble and a first field. A frequency domain range corresponding to the first field includes a plurality of frequency domain sub-ranges (for example, a frequency domain sub-range #1, a frequency domain sub-range #2, a frequency domain sub-range #3, and a frequency domain sub-range #4 shown in FIG. 7). Each frequency domain sub-range is used to send one beam set (beam set). In this case, the plurality of frequency domain sub-ranges correspond to a plurality of beam sets (for example, a beam set #1, a beam set #2, a beam set #3, and a beam set #4 shown in FIG. 7). Each of the plurality of beam sets includes at least one beam. To be specific, the first station sends the plurality of beam sets in different frequency domain sub-ranges of the first field in the frequency division manner.

For example, in addition to the first field, the first PPDU in FIG. 7 may further include one or more of the following fields, or the first field may include a function of one or more of the following fields, such as a preamble-related field (like an LTF field, an STF field, or a signal field), a data field, a packet extension field, and an automatic gain control (Auto Gain Control, AGC) field. A specific format of the PPDU is not limited in this application.

It should be understood that, the frequency domain sub-range #1, the frequency domain sub-range #2, the frequency domain sub-range #3, and the frequency domain sub-range #4 in FIG. 7 are merely examples, and indicate that the first field may correspond to a plurality of frequency domain sub-ranges, and are merely used for presentation of different frequency domain sub-ranges in frequency division. This application does not limit a quantity (which may be greater than or equal to 2) of frequency domain sub-ranges that are used for sending beam sets and that are obtained by dividing a frequency in the first frequency domain range (or bandwidth) corresponding to the first PPDU.

It can be learned from the foregoing description that the first station may send, in the frequency division manner, a beam used for beam training to another station in a plurality of different frequency domain sub-ranges corresponding to the first field. To enable the receive end to learn whether a subsequently received beam used for beam training is to be sent in the frequency division manner, the first station may send, to the second station, a related indication indicating whether to perform beam training in the frequency division manner.

For example, the first station sends first indication information to the second station, where the first indication information indicates one or more of the following information: a quantity of frequency domain sub-ranges corresponding to the first field, a size of the first frequency domain sub-range, or a size of the second frequency domain sub-range.

For example, when the first indication information indicates that there are a plurality of frequency domain sub-ranges corresponding to the first field, it is equivalent to that the first indication information indicates that beam training is performed in the frequency division manner.

For another example, when the first indication information indicates sizes of a plurality of different frequency domain sub-ranges, it is equivalent to that the first indication information indicates that beam training is performed in the frequency division manner.

For example, the first indication information may further indicate that there are a plurality of frequency domain sub-ranges in the frequency domain range corresponding to the first field.

For example, the first indication information may be 1 bit. A first value indicates that there are a plurality of frequency domain sub-ranges in the frequency domain range corresponding to the first field, and a second value indicates that there are not a plurality of frequency domain sub-ranges in the frequency domain range corresponding to the first field.

For ease of understanding, the following describes a possible form of the first indication information based on a specific example.

Example 1: The first indication information indicates, by indicating a size of a frequency domain sub-range, a quantity of frequency domain sub-ranges corresponding to the first field and/or sizes of the frequency domain sub-ranges corresponding to the first field.

For example, the first frequency domain range corresponding to the first PPDU is 80 MHz. If the first indication information indicates that the size of the frequency domain sub-range is 20 MHz, it may be understood that a quantity of frequency domain sub-ranges corresponding to the first field is 4, and sizes of the four frequency domain sub-ranges are 0 MHz to 20 MHz, 20 MHz to 40 MHz, 40 MHz to 60 MHz, and 60 MHz to 80 MHz respectively.

Example 2: The first indication information indicates, by indicating a quantity of frequency domain sub-ranges, a quantity of frequency domain sub-ranges corresponding to the first field and/or sizes of the frequency domain sub-ranges corresponding to the first field.

For example, the first frequency domain range corresponding to the first PPDU is 80 MHz. If the first indication information indicates that the quantity of frequency domain sub-ranges is 4, it may be understood that the quantity of frequency domain sub-ranges corresponding to the first field is 4, and sizes of the four frequency domain sub-ranges are 0 MHz to 20 MHz, 20 MHz to 40 MHz, 40 MHz to 60 MHz, and 60 MHz to 80 MHz respectively.

Example 3: The first indication information indicates, by indicating an index of a frequency division manner, a quantity of frequency domain sub-ranges corresponding to the first field and/or sizes of the frequency domain sub-ranges corresponding to the first field.

For example, the first station and the second station negotiate in advance a frequency division manner indicated by an index of at least one frequency division manner, and the first station may indicate the frequency division manner through an index. For example, the frequency division manner includes an even division manner 1 and an even division manner 2. An index of the even division manner 1 is 1, indicating that the first frequency domain range corresponding to the first PPDU is evenly divided into a plurality of 20 MHz frequency domain sub-ranges. An index of the even division manner 2 is 2, indicating that the first frequency domain range corresponding to the first PPDU is evenly divided into a plurality of 40 MHz frequency domain sub-ranges.

When the first frequency domain range corresponding to the first PPDU is 80 MHz, if the first indication information indicates that the index of the frequency division manner is 1, it may be understood that a quantity of frequency domain sub-ranges corresponding to the first field is 4, and sizes of the four frequency domain sub-ranges are 0 MHz to 20 MHz, 20 MHz to 40 MHz, 40 MHz to 60 MHz, and 60 MHz to 80 MHz respectively. If the first indication information indicates that the index of the frequency division manner is 2, it may be understood that a quantity of frequency domain sub-ranges corresponding to the first field is 2, and sizes of the two frequency domain sub-ranges are respectively 0 MHz to 40 MHz and 40 MHz to 80 MHz respectively.

Example 4: The first indication information indicates, based on a bitmap, a quantity of frequency domain sub-ranges corresponding to the first field and/or sizes of the frequency domain sub-ranges corresponding to the first field. Each bit represents a minimum frequency domain granularity, and channel division is alternately indicated by using 0 and 1. For example, the minimum frequency domain granularity is 20 MHz.

For example, the first frequency domain range corresponding to the first PPDU is 320 MHz. If the first indication information is 0000 1111 0011 1111, it may be understood that a quantity of frequency domain sub-ranges corresponding to the first field is 4, a 1^{st} frequency domain sub-range corresponds to 80 MHz and a location of the 1^{st} frequency domain sub-range, a 2^{nd} frequency domain sub-range corresponds to 80 MHz and a frequency is higher than that of the 1^{st} frequency domain sub-range, a 3^{rd} frequency domain sub-range corresponds to 40 MHz, and a 4^{th} frequency domain sub-range corresponds to 120 MHz.

Optionally, the first indication information may be included in preamble signaling, or may be included in MAC signaling, or may be information indicating a corresponding frequency domain sub-range in a preamble corresponding to each frequency domain sub-range. In addition, the first indication information may also perform joint indication with another field (for example, a preamble-related field, a data field, a packet extension field, or an automatic gain control field), to implement content indicated by the first indication information.

It should be understood that, in this embodiment, the first field is mainly used for beam training, but another function of the first field is not limited. For example, the first field may be further used for frequency division information sending. In other words, the first field may have a function of a data field. In this embodiment, another function of the first field is not described in detail, and the first field used for beam training is mainly described.

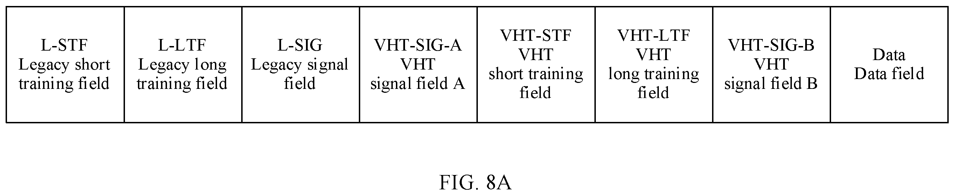

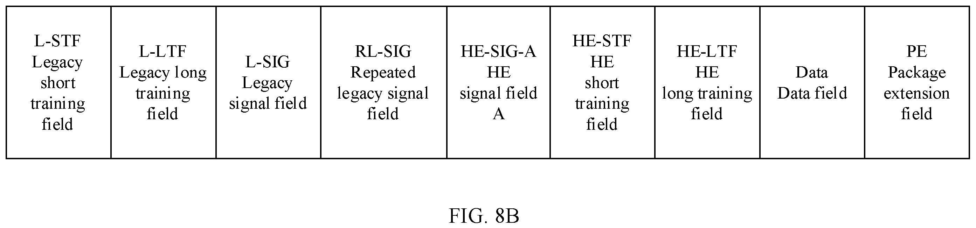

As described above, the PPDU of the integrated millimeter wave may be a PPDU of an upclocking version based on a PPDU in a low-frequency OFDM format. Some fields may be changed. For example, the PPDU of the integrated millimeter wave may be a new-generation 802.11bn (UHR), and a specific format of a UHR PPDU is not limited. The following uses an example in which the PPDU that carries the first indication information is a VHT (as shown in FIG. 8A), an HE (as shown in FIG. 8B), or an EHT PPDU (as shown in FIG. 3) in the 802.11 standard to describe a possible case of a location of the first indication information in the PPDU.

The first indication information may be located in one or more of the following fields: an L-SIG, a RL-SIG, a VHT-SIG-A, a VHT-SIG-B, an HE-SIG-A, an HE-SIG-B, a U-SIG, an EHT-SIG, and the like. In addition, the first indication information may further exist in various SIGs of a plurality of existing or future to-be-defined PPDUs, and a name is not limited.

The first indication information may jointly indicate information related to the first field with various fields/subfields.

Optionally, the first indication information may exist in a common field. Further, the first indication information may exist in a resource unit allocation subfield, and may indicate different frequency domain sub-ranges based on the resource unit allocation subfield. It should be understood that, in this case, the frequency domain range indicated by the first indication information may not be a RU/MRU for data transmission, but the frequency domain sub-range of the first field. Alternatively, it may be considered that RU/MRU allocation of the data field is allocation of the frequency domain sub-range.

In addition, the first indication information may also exist in a preamble puncturing related field, or may jointly indicate a frequency domain sub-range with a preamble puncturing related field.

In addition, specific configuration information of each frequency domain sub-range, like time division information, may be carried by using a user-specific field. In this case, an original meaning of a user field in the user-specific field may be rewritten, or may be implemented by adding a special user field.

In addition, a padding part in an original SIG (for example, an EHT-SIG) may indicate information related to the first field.

In addition, frequency division indication information of at least one bit may be added to a SIG (for example, a U-SIG, an EHT-SIG, or a future to-be-defined SIG), to indicate that the resource element allocation subfield, the user-specific field, or the padding part has a new meaning and is used to carry the first indication information.

It should be understood that a null data packet (Null data packet, NDP), that is, a PPDU without data, may be further designed for frequency division beamforming. In this case, the first indication information may exist in an NDP announcement (NDP Announcement, NDPA) frame before the NDP, or may exist in a SIG field of the NDP. The first indication information may be carried based on the resource element allocation subfield and/or the user-specific field.

In a possible implementation, sending the first beam set in the first frequency domain sub-range, and sending the second beam set in the second frequency domain sub-range includes: separately sending a plurality of beams in the first beam set in a plurality of first time domain ranges in the first frequency domain sub-range, where directions of the plurality of beams in the first beam set are different; and/or separately sending a plurality of beams in the second beam set in a plurality of second time domain ranges in the second frequency domain sub-range, where directions of the plurality of beams in the second beam set are different.

In this implementation, the first station may send beams in the beam set in the time division manner in different frequency domain sub-ranges of the first field.

For example, when the first beam set includes a plurality of beams, the plurality of beams may be sent in the time division manner in the first frequency domain sub-range. For example, the first beam set includes a first beam #1, a first beam #2, and a first beam #3. The first beam #1 is sent in a first time domain range #1 in the first frequency domain sub-range, the first beam #2 is sent in a first time domain range #2 in the first frequency domain sub-range, the first beam #3 is sent in a first time domain range #3 in the first frequency domain sub-range, and beam directions of the first beam #1, the first beam #2, and the first beam #3 are different.

It should be noted that, in this embodiment, directions of beams sent in different frequency domain sub-ranges at at least one moment are different, and all beam directions are not limited to be different. For example, in this embodiment, directions of some beams sent in the first field may be the same as the preamble direction; or for another example, in this embodiment, directions of beams sent in a frequency domain sub-range of the first field may be all the same; or for another example, directions of beams in a time period of the first field in this embodiment may be all the same. This is not limited.

For example, a plurality of beams may be sent in a first time domain range in the first frequency domain sub-range. For example, the first beam set includes a first beam #1 and a first beam #4, both the first beam #1 and the first beam #4 are sent in a first time domain range #1 in the first frequency domain sub-range, and a direction of the first beam #4 is the same as or different from a direction of the first beam #1.

For another example, in a time period, beam directions of a first beam # 5 and a first beam # 6 that are sent in the first frequency domain sub-range of the first field and a second beam # 5 and a second beam # 6 that are sent in the first frequency domain sub-range are the same.

Optionally, the foregoing time domain range may be referred to as a beam training unit, and each beam training unit may correspond to a group of beam configurations. A simple group of beam configurations may correspond to one sending direction, or may correspond to a plurality of sending directions. Whether repeated sending is performed in a same direction is not limited. In general, the beam training unit is divided to better perform time division training and signaling notification.

Further, division manners of time domain ranges in different frequency domain sub-ranges may be different.

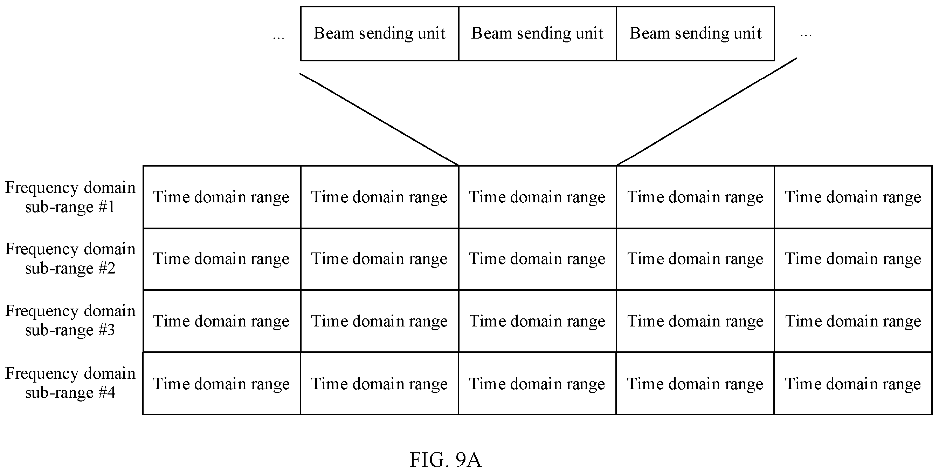

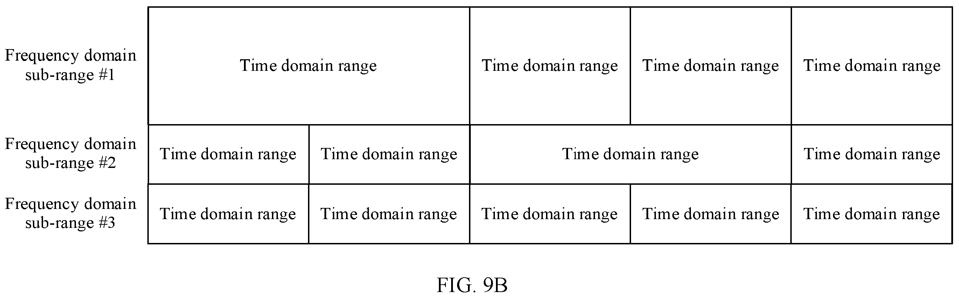

For ease of understanding, the following briefly describes division manners of different frequency domain sub-ranges and division manners of time domain ranges in different frequency domain sub-ranges with reference to FIG. 9A and FIG. 9B.

It can be learned from FIG. 9A that a frequency domain range corresponding to a first field is divided into four frequency domain sub-ranges (a frequency domain sub-range #1, a frequency domain sub-range #2, a frequency domain sub-range #3, and a frequency domain sub-range #4 shown in FIG. 9A), and each frequency domain sub-range corresponds to a same frequency domain range size. This is equivalent to that the frequency domain range corresponding to the first field is evenly divided into four segments. A quantity of time domain ranges in different frequency domain sub-range is the same, and each time domain range includes at least one beam sending unit.

It can be learned from FIG. 9B that a frequency domain range corresponding to a first field is divided into three frequency domain sub-ranges (a frequency domain sub-range #1, a frequency domain sub-range #2, and a frequency domain sub-range #3 shown in FIG. 9B). A frequency domain range size corresponding to the frequency domain sub-range #1 is different from a frequency domain range size corresponding to the frequency domain sub-range #2 and a frequency domain range size corresponding to the frequency domain sub-range #3. In addition, quantities of time domain ranges obtained by dividing different frequency domain sub-ranges are different (as shown in FIG. 9B, four time domain ranges are obtained by dividing the frequency domain sub-range #1, and five time domain ranges are obtained by dividing the frequency domain sub-range #3).

It can be learned from the foregoing description that the first station may send, in the time division manner, a beam used for beam training to another station in a frequency domain sub-range. To enable the receive end to learn how a subsequently received beam used for beam training is sent in the time division manner, the first station may send, to the second station, a related indication for performing beam training in the time division manner.

For example, the first station sends second indication information to the second station, where the second indication information indicates at least one of the following information: a quantity of first time domain ranges corresponding to the first frequency domain sub-range, configuration information of the first time domain range, a length of a training field in the first time domain range, a quantity of symbols of the training field in the first time domain range, a quantity of second time domain ranges corresponding to the second frequency domain sub-range, configuration information of the second time domain range, a length of a training field in the second time domain range, and a quantity of symbols of the training field in the second time domain range.

Further, the first station may send information related to a beam ID (for example, a sector ID, an antenna ID, or an antenna weight vector ID) to the second station. The ID may be used to mark a beam corresponding to a training unit, a plurality of beams in a training unit, or the like.

Optionally, the second indication information may be included in preamble signaling, or may be included in MAC signaling, or may be information indicating a corresponding frequency domain sub-range in a preamble corresponding to each frequency domain sub-range. In addition, the second indication information may also perform joint indication with another field (for example, a preamble-related field, a data field, a packet extension field, or an automatic gain control field), to implement content indicated by the second indication information.

It should be understood that, in this embodiment, signaling information about the first field, including frequency division information, time division information, and the like, for example, the first indication information and/or the second indication information, may be exchanged in another PPDU before the first PPDU in which the first field is located. For example, there may be a beam training declaration frame, a beam training notification frame, a beam training setup frame, or the like to notify configuration information of the first field in advance. Details are not described herein.

It should be noted that, in this embodiment, that the first station sends a beam to the second station is equivalent to that the first station sends, to the second station, a sequence corresponding to the beam. A sequence corresponding to the first beam set that is sent on a subcarrier in the first frequency domain sub-range is a first sequence, and a sequence corresponding to the second beam set that is sent on a subcarrier in the second frequency domain sub-range is a second sequence. In this embodiment, a manner of determining the first sequence and the second sequence includes but is not limited to the following two manners:

Manner 1: Determine the first sequence and the second sequence based on a sequence corresponding to the first frequency domain range.

In the case shown in Manner 1, the first sequence is a partial sequence that is of a sequence corresponding to the first frequency domain range and that is sent on at least one first subcarrier, and the second sequence is a partial sequence that is of the sequence corresponding to the first frequency domain range and that is sent on at least one second subcarrier.

A location of the at least one first subcarrier is the same as a subcarrier location of the first frequency domain sub-range. In addition, a location of the at least one second subcarrier is the same as a subcarrier location of the second frequency domain sub-range. For example, an index of the at least one first subcarrier is the same as an index of the subcarrier in the first frequency domain sub-range, and an index of the at least one second subcarrier is the same as an index of the subcarrier in the second frequency domain sub-range.

Alternatively, the sequence corresponding to the first frequency domain range is randomly divided into the first sequence and the second sequence, where the first sequence is a sequence corresponding to the firsALTERt beam set that is sent on the subcarrier in the first frequency domain sub-range, and the second sequence is a sequence corresponding to the second beam set that is sent on the subcarrier in the second frequency domain sub-range.

It should be understood that the foregoing manner of determining the first sequence and the second sequence based on the sequence corresponding to the first frequency domain range is merely an example, and does not constitute any limitation on the protection scope of this application. Another manner of determining the first sequence and the second sequence based on the sequence corresponding to the first frequency domain range also falls within the protection scope of this application.

For example, the sequence corresponding to the first frequency domain range includes a short training field STF sequence or a long training field LTF sequence for a first bandwidth. The sequence corresponding to the first frequency domain range represents a constellation point carried on a subcarrier in the first frequency domain range. For example, the STF sequence or the LTF sequence for the first bandwidth includes but is not limited to an L-STF, an L-LTF, and an STF and an LTF that are specific to each generation of standards, such as an HE-LTF and an EHT-STF.

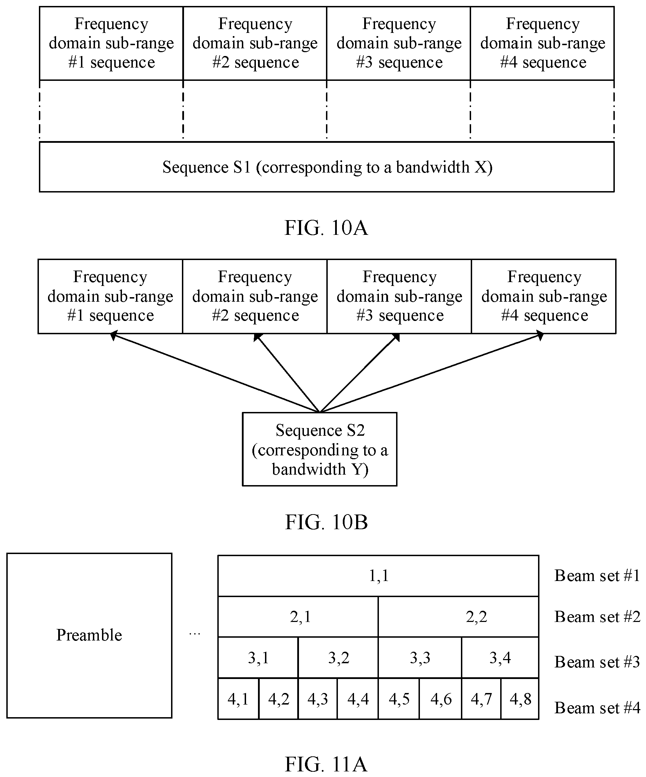

For ease of understanding, a form of a sequence corresponding to a beam in Manner 1 is described in detail with reference to FIG. 10A.

It is assumed that a bandwidth corresponding to a first PPDU is X, a frequency domain range corresponding to a frequency domain sub-range obtained through frequency division is Y, and X may be exactly divided by Y. A non-frequency division beam training sequence S1 already exists in the first PPDU whose bandwidth is X. The non-frequency division beam training sequence S1 of the first PPDU whose bandwidth is X is sent in a division manner. In other words, a sequence sent on a subcarrier in a corresponding frequency domain sub-range is a sequence corresponding to a subcarrier at a same location corresponding to the beam training sequence S1.

It can be learned from FIG. 10A that a first field is carried in four frequency domain sub-ranges, for example, a frequency domain sub-range #1, a frequency domain sub-range #2, a frequency domain sub-range #3, and a frequency domain sub-range #4. A sequence (for example, a frequency domain sub-range #1 sequence shown in FIG. 10A) sent on a subcarrier in the frequency domain sub-range #1 is the sequence corresponding to the subcarrier in the same location corresponding to the beam training sequence S1. A sequence (for example, a frequency domain sub-range #2 sequence shown in FIG. 10A) sent on a subcarrier in the frequency domain sub-range #2 is the sequence corresponding to the subcarrier in the same location corresponding to the beam training sequence S1. A sequence (for example, a frequency domain sub-range #3 sequence shown in FIG. 10A) sent on a subcarrier in the frequency domain sub-range #3 is the sequence corresponding to the subcarrier in the same location corresponding to the beam training sequence S1. A sequence (for example, a frequency domain sub-range #4 sequence shown in FIG. 10A) sent on a subcarrier in the frequency domain sub-range #4 is the sequence corresponding to the subcarrier in the same location corresponding to the beam training sequence S1.

Manner 2: Determine the first sequence and the second sequence based on sequences respectively corresponding to different frequency domain sub-ranges.

In the case shown in Manner 2, the first sequence is a sequence corresponding to the first frequency domain sub-range, and the second sequence is a sequence corresponding to the second frequency domain sub-range.

For example, the sequence corresponding to the first frequency domain sub-range includes a short training field STF sequence or a long training field LTF sequence for the first frequency domain sub-range; and/or the sequence corresponding to the second frequency domain sub-range includes a short training field STF sequence or a long training field LTF sequence for the second frequency domain sub-range. For example, the STF sequence or the LTF sequence for the first frequency domain sub-range or the second frequency domain sub-range includes but is not limited to an L-STF, an L-LTF, and an STF and an LTF that are specific to each generation of standards, such as an HE-LTF and an EHT-STF.

For ease of understanding, a form of a sequence corresponding to a beam in Manner 2 is described in detail with reference to FIG. 10B. It is assumed that a bandwidth corresponding to a first PPDU is X, a frequency domain range corresponding to a frequency domain sub-range obtained through frequency division is Y, and X may be exactly divided by Y. A non-frequency division beam training sequence S2 already exists in the bandwidth Y.

It can be learned from FIG. 10B that a first field is carried in four frequency domain sub-ranges, for example, a frequency domain sub-range #1, a frequency domain sub-range #2, a frequency domain sub-range #3, and a frequency domain sub-range #4. A sequence (for example, a frequency domain sub-range #1 sequence shown in FIG. 10B) sent on a subcarrier in the frequency domain sub-range #1 is the beam training sequence S2. A sequence (for example, a frequency domain sub-range #2 sequence shown in FIG. 10B) sent on a subcarrier in the frequency domain sub-range #2 is the beam training sequence S2. A sequence (for example, a frequency domain sub-range #3 sequence shown in FIG. 10B) sent on a subcarrier in the frequency domain sub-range #3 is the beam training sequence S2. A sequence (for example, a frequency domain sub-range #4 sequence shown in FIG. 10B) sent on a subcarrier in the frequency domain sub-range #4 is the beam training sequence S2.

It should be understood that FIG. 10A and FIG. 10B are merely examples of forms of sequences corresponding to beams transmitted in different frequency domain sub-ranges in this embodiment, and do not constitute any limitation on the protection scope of this application. In this embodiment, a form of a sequence corresponding to a beam transmitted in a frequency domain sub-range may further include another possibility. For example, different frequency domain sub-ranges correspond to different bandwidths, for example, Y1 corresponding to the frequency domain sub-range #1, Y2 corresponding to the frequency domain sub-range #2, Y3 corresponding to the frequency domain sub-range #3, and Y4 corresponding to the frequency domain sub-range #4. In this case, the frequency domain sub-range #1 sequence is a non-frequency division beam training sequence S3 of a PPDU whose bandwidth is Y1, the frequency domain sub-range #2 sequence is a non-frequency division beam training sequence S4 of a PPDU whose bandwidth is Y2, the frequency domain sub-range #3 sequence is a non-frequency division beam training sequence S5 of a PPDU whose bandwidth is Y3, the frequency domain sub-range #4 sequence is a non-frequency division beam training sequence S6 of a PPDU whose bandwidth is Y4, and the like. Examples are not described herein again one by one.

Specifically, in this embodiment, the receive end may feed back beam-related measurement information, like channel state information, signal-to-noise ratio information, and delay information, to the first station. In this case, the method procedure shown in FIG. 6 further includes the following step.

S620. The second station sends a response message to the first station, and correspondingly, the first station receives the response message from the second station.

Specifically, the response message includes an identifier of a third beam and/or location information of the third beam, and the location information of the third beam indicates a frequency domain range and a time domain range that correspond to the third beam. It should be understood that, in this embodiment, the second station serves as a receive end, and has a capability of receiving beams in a plurality of frequency domain ranges and detecting a frequency domain range in which a beam meets a requirement.

For example, the third beam is a beam that meets a requirement and that is obtained by the second station through beam training, and may be a beam in the first beam set or the second beam set, or may be another beam that meets the requirement. In this embodiment, how the second station performs beam training to obtain the beam that meets the requirement is not limited. For details, refer to descriptions of beam training in the current related technology. Details are not described herein.

In this embodiment, after determining at least one beam that meets the requirement, the second station may report related beam information to the first station through the response message. For ease of description, an example in which the second station reports information about a beam (for example, the third beam) is used for description.

In a possible implementation, the second station may explicitly carry identification information of the beam in the response message. For example, the response message includes the identifier of the third beam.

Optionally, the response message further includes measurement information of the third beam. In this implementation, the second station may feed back the beam-related measurement information together with the identifier of the beam, for example, (an identifier 1 of a beam, measurement information) + (an identifier 2 of a beam, measurement information). The identifier of the beam may include any one or more of the following information: information that can be used to identify a beam, like an ID of the beam, a sector ID, an antenna ID, or an antenna weight vector ID. This is not limited in this application.

In another possible implementation, the second station may implicitly indicate the third beam by adding the location information of the third beam to the response message.

For example, the location information of the third beam includes:
an identifier of the frequency domain range corresponding to the third beam and an identifier of the time domain range corresponding to the third beam; or a location identifier corresponding to the third beam, where the location identifier is an identifier that corresponds to the third beam and that is in a plurality of location identifiers that are identified in the first field in a chronological order in time domain and an order from a low frequency to a high frequency in frequency domain.

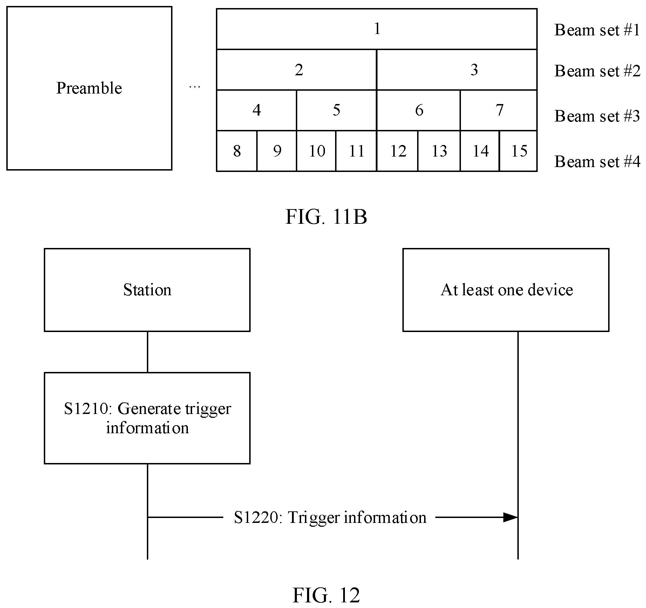

For ease of understanding, the location information of the beam is briefly described with reference to FIG. 11A and FIG. 11B.

It can be learned from FIG. 11A that the location information of the beam is a two-dimensional identifier including the identifier of the frequency domain range and the identifier of the time domain range. For example, the first field is carried in four frequency domain sub-ranges, for example, a frequency domain sub-range #1, a frequency domain sub-range #2, a frequency domain sub-range #3, and a frequency domain sub-range #4. A beam location identifier sent in the frequency domain sub-range #1 is (1,1). The frequency domain sub-range #2 is divided into a time domain range 1 and a time domain range 2. To be specific, a beam location identifier sent in the time domain range 1 of the frequency domain sub-range #2 is (2,1), and a beam location identifier sent in the time domain range 2 of the frequency domain sub-range #2 is (2,2). The frequency domain sub-range #3 is divided into a time domain range 1, a time domain range 2, a time domain range 3, and a time domain range 4. To be specific, a beam location identifier sent in the time domain range 1 of the frequency domain sub-range #3 is (3,1), a beam location identifier sent in the time domain range 2 of the frequency domain sub-range #3 is (3,2), a beam location identifier sent in the time domain range 3 of the frequency domain sub-range #3 is (3,3), and a beam location identifier sent in the time domain range 4 of the frequency domain sub-range #3 is (3,4). The frequency domain sub-range #4 is divided into a time domain range 1, a time domain range 2, a time domain range 3, a time domain range 4, a time domain range 5, a time domain range 6, a time domain range 7, and a time domain range 8. To be specific, a beam location identifier sent in the time domain range 1 of the frequency domain sub-range #4 is (4,1), a beam location identifier sent in the time domain range 2 of the frequency domain sub-range #4 is (4,2), a beam location identifier sent in the time domain range 3 of the frequency domain sub-range #4 is (4,3), a beam location identifier sent in the time domain range 4 of the frequency domain sub-range #4 is (4,4), a beam location identifier sent in the time domain range 5 of the frequency domain sub-range #4 is (4,5), a beam location identifier sent in the time domain range 6 of the frequency domain sub-range #4 is (4,6), a beam location identifier sent in the time domain range 7 of the frequency domain sub-range #4 is (4,7), and a beam location identifier sent in the time domain range 8 of the frequency domain sub-range #4 is (4,8).

It can be learned from FIG. 11A that the location information of the beam is a frequency domain range (for example, the first frequency domain range corresponding to the first PPDU) and a time domain range (for example, the first field), and is divided into a plurality of locations in time domain and frequency domain. After the locations are uniformly numbered, a location corresponding to a number is equivalent to a one-dimensional identifier including time domain location information and frequency domain location information. For example, the first field is carried in four frequency domain sub-ranges, for example, a frequency domain sub-range #1, a frequency domain sub-range #2, a frequency domain sub-range #3, and a frequency domain sub-range #4. The frequency domain sub-range #1 corresponds to one time domain range. The frequency domain sub-range #2 is divided into a time domain range 1 and a time domain range 2. The frequency domain sub-range #3 is divided into a time domain range 1, a time domain range 2, a time domain range 3, and a time domain range 4. The frequency domain sub-range #4 is divided into a time domain range 1, a time domain range 2, a time domain range 3, a time domain range 4, a time domain range 5, a time domain range 6, a time domain range 7, and a time domain range 8. Therefore, a plurality of locations that are identified in a chronological order in time domain and an order from a low frequency to a high frequency in frequency domain are 1, 2, 3, 4, 5, 6, 7, 8, 9, 10, 11, 12, 13, 14, 15.

If the second station determines, through beam training, that a beam #1 sent in the time domain range 1 in the frequency domain sub-range #2 meets a condition, the second station may feed back location information of the beam #1, for example, feed back two-dimensional location information (2,1) or one-dimensional location information 2.

In the communication method shown in FIG. 6, the first PPDU sent by the first station carries the first field (for example, a training field) used for beam training, and the frequency domain range corresponding to the first field includes the first frequency domain sub-range and the second frequency domain sub-range. Specifically, the first frequency domain sub-range and the second frequency domain sub-range have the non-overlapping part, and the sum of the first frequency domain sub-range and the second frequency domain sub-range is less than or equal to the frequency domain range in which the first station sends the first PPDU. The first station may send the first beam set in the first frequency domain sub-range of the first field, and send the second beam set in the second frequency domain sub-range of the first field, where directions of beams sent in different frequency domain sub-ranges at at least one moment are different, so that beams used for beam training are sent in different frequency domain sub-ranges in a frequency division manner, to implement frequency division beam training and reduce beam training overheads.

This application further provides a communication method. A station may trigger another station to perform beam training in a frequency division manner. The following describes the communication method in detail with reference to FIG. 12.

FIG. 12 is a schematic flowchart of a communication method according to an embodiment of this application. The method includes the following steps.

### S1210: Generate trigger information.

Specifically, when a station determines to trigger at least one device to send, in a frequency division manner, a beam used for beam training, the station generates the trigger information. The trigger information indicates the at least one device to send, in the frequency division manner, the beam used for beam training.

It should be understood that a condition for generating the trigger information by the station is not limited in this embodiment. The station may determine that the trigger information needs to be generated, or a management device may indicate the station to generate the trigger information.

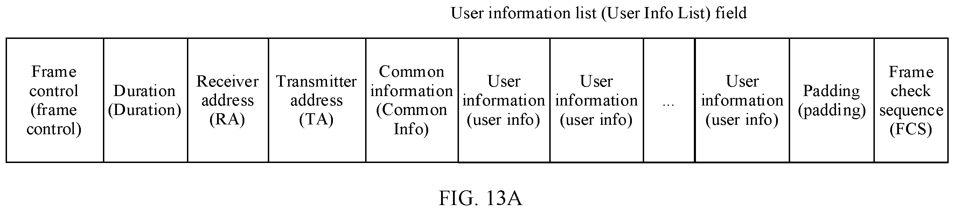

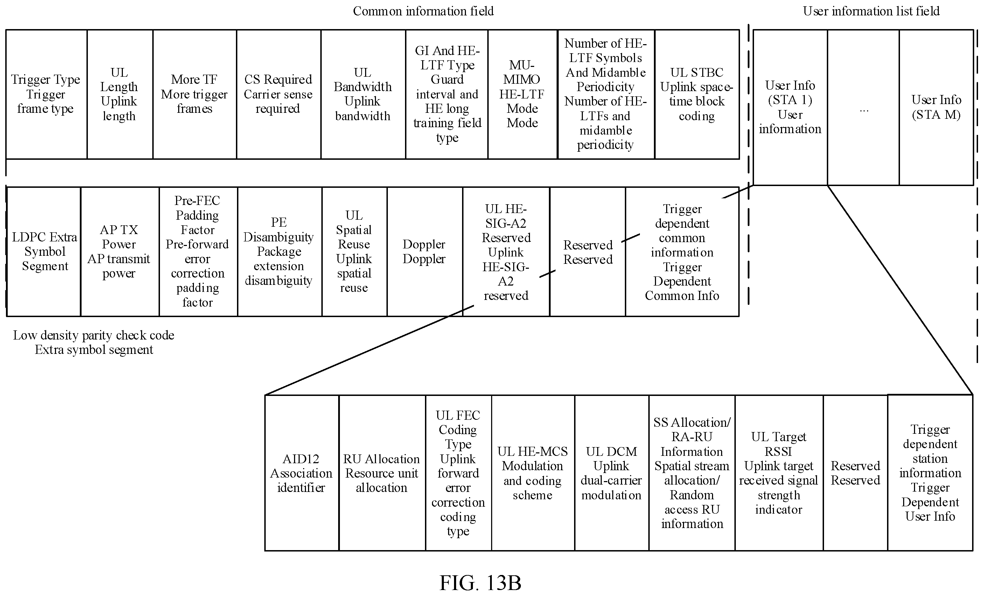

For example, the trigger information may be carried in a PPDU. For ease of understanding, a possible form of the trigger information is briefly described with reference to FIG. 13A and FIG. 13B.

By way of example and not limitation, the trigger information in this embodiment may be carried in a trigger frame, and the trigger frame is used to schedule uplink transmission.

For example, that an AP schedules uplink transmission by using the trigger frame includes:
Step 1: The AP first sends the trigger frame, where the trigger frame includes resource scheduling and another parameter that are used by one or more STAs to send a high efficiency trigger-based physical layer protocol data unit (High Efficiency Trigger-Based PHY Protocol Data Unit, HE TB PPDU). A format of the trigger frame is shown in FIG. 13A.

It can be learned from FIG. 13A that the trigger frame includes a common information (Common Info) field and a user information list (User Info List) field. The common information field includes common information that all STAs need to read. A UL bandwidth (uplink bandwidth) field indicates a bandwidth of an HE TB PPDU triggered by the trigger frame, and there are two bits in total, where 00 represents 20 MHz, 01 represents 40 MHz, 10 represents 80 MHz, and 11 represents 160 MHz or 80+80 MHz. The 80+80 MHz is a case in which two 80 MHz are discontinuous. The user information list field includes one or more user information fields, and each user information field includes information that each STA needs to read. In the user information field, an association identifier (Association Identification 12, AID12, indicating low 12 bits of an AID) indicates a station identifier of a STA, and a resource unit allocation (RU Allocation) subfield indicates a specific location of an allocated resource unit (Resource Unit, RU) of the STA (a STA indicated by the AID12). Specific content of the common information field and the user information field is shown in FIG. 13B.

Step 2: After receiving the trigger frame, the STA sends the HE TB PPDU based on the trigger frame. For example, the STA parses out, from the trigger frame, the user information field that matches the AID of the STA, and then sends the HE TB PPDU on the RU indicated by the resource unit allocation subfield in the user information field. Names and simple functions of fields of the PPDU are shown in the following Table 2:

**Table 2**

| Field | Function |
|---|---|
| Legacy short training field (Legacy Short | Used for PPDU discovery, coarse |
| Training Field, L-STF) | synchronization, and automatic gain control |
| Legacy long training field (Legacy Long Training Field, L-LTF) | Used for fine synchronization and channel estimation |
| Legacy signal field (Legacy Signal Field A, L-SIG) | Used for carrying signaling information related to a PPDU length, to ensure coexistence, where |
| High efficiency signal field A (High Efficiency Signal Field A, HE-SIG-A) | Used for carrying signaling used for demodulating subsequent data, and |
| High efficiency short training field (High Efficiency Short Training Field, HE-STF) | Used for automatic gain control of a subsequent field |
| High efficiency long training field (High Efficiency Long Training Field, HE-LTF) | Used for channel estimation |
| Data (Data) | Carrying data information |
| Packet extension (Packet Extension, PE) | Helping a receive end obtain more processing time |

In the HE-SIG-A field in the HE TB PPDU, there is a bandwidth (BW) field indicating a bandwidth of the HE TB PPDU. The bandwidth is also two bits, and content and a meaning of the bandwidth are equal to those of the UL BW field in the trigger frame.

Step 3: After receiving the HE TB PPDU sent by the STA, the AP sends an acknowledgment frame to the STA.

The 802.11be uses the trigger-based transmission in the 802.11ax. A trigger frame of the 802.11be reuses a trigger frame type and a subtype of the 802.11ax, and may be received and understood by both an HE STA and an EHT STA. Based on a design, the trigger frame may be used to trigger the HE TB PPDU, EHT TB PPDU, or a combination of the HE TB PPDU and the EHT TB PPDU. A trigger frame design in 802.11be is not listed herein.

For example, the trigger information may exist in the common field of the trigger frame, or may exist in the user information field of the trigger frame. Information that all users need to know may be placed in the common field, and information that only a user knows may be placed in the user information field. One or more frequency domain sub-ranges corresponding to a user may be indicated based on the resource unit allocation field.

In addition, a new trigger frame type may be designed to trigger a PPDU used for beam training (this is not limited to a frequency division PPDU, and a conventional time division beam training PPDU may also use this manner). The PPDU may be a conventional TB (Trigger-based) PPDU, or may be a TB PPDU of a new type, or may be referred to as another name. This is not limited.

S1220: The station sends the trigger information.

Specifically, the trigger information indicates to send, in the frequency division manner, the beam used for beam training. The trigger information may be a request frame, a trigger frame, or the like.

In a possible implementation, the station may indicate, based on the trigger information, a device to send, in the frequency division manner, the beam used for beam training.

For example, the station sends third indication information, where the third indication information indicates a first device to send a second field used for beam training, a frequency domain range corresponding to the second field includes a third frequency domain sub-range and a fourth frequency domain sub-range, and a direction of a beam sent in the third frequency domain sub-range at a second moment is different from a direction of a beam sent in the fourth frequency domain sub-range at the second moment.

In this implementation, the first device may send, in the frequency division manner, the beam used for beam training. For example, the first device sends a third beam set in the third frequency domain sub-range of the second field, and sends a fourth beam set in the fourth frequency domain sub-range of the second field, where a direction of a third beam sent in the third frequency domain sub-range at a second moment is different from a direction of a fourth beam sent in the fourth frequency domain sub-range at the second moment, the third beam belongs to the third beam set, and the fourth beam belongs to the fourth beam set.

In this implementation, for a manner in which the first device sends, in the frequency division manner, the beam used for beam training, refer to related descriptions of sending, by the first station in the frequency division manner, the beam used for beam training in the communication method shown in FIG. 6. Details are not described herein again.

In another possible implementation, the station may indicate, based on the trigger information, a plurality of devices to send, in the frequency division manner, the beam used for beam training.

For example, the station sends fourth indication information, where the fourth indication information indicates the first device to send a third field used for beam training and indicates a second device to send a fourth field used for beam training, a frequency domain range corresponding to the third field includes a fifth frequency domain sub-range, a frequency domain range corresponding to the fourth field includes a sixth frequency domain sub-range, and a direction of a beam sent in the fifth frequency domain sub-range at a third moment is different from a direction of a beam sent in the sixth frequency domain sub-range at the third moment.

In this implementation, the beam used for beam training may be sent between the first device and the second device in the frequency division manner. For example, the first device sends a fifth beam set in the fifth frequency domain sub-range of the second field, and the second device sends a sixth beam set in the sixth frequency domain sub-range of the third field, where a direction of a fifth beam sent by the first device in the fifth frequency domain sub-range at a third moment is different from a direction of a sixth beam sent by the second device in the sixth frequency domain sub-range at the third moment, the fifth beam belongs to the fifth beam set, and the sixth beam belongs to the sixth beam set.

In this implementation, for a manner in which the first device and the second device send, in the frequency division manner, the beam used for beam training, refer to related descriptions of sending, by the first station in the frequency division manner, the beam used for beam training in the communication method shown in FIG. 6. A difference lies that, in this implementation, the first device and the second device separately perform beam sending in different frequency domain sub-ranges, to implement sending of the beam used for beam training in the frequency division manner. Details are not described herein again.

For example, the station sends the fourth indication information in the following several possible manners:
sending the fourth indication information in a frequency domain sub-range corresponding to a fourth beam, where the first device and the second device are in a preset range of a beam direction corresponding to the fourth beam; or
separately sending the fourth indication information in a frequency domain sub-range corresponding to a fourth beam and a frequency domain sub-range corresponding to a fifth beam, where the first device is in a preset range of a beam direction corresponding to the fourth beam, the second device is in a preset range of a beam direction corresponding to the fifth beam, and the fourth beam and the fifth beam have different directions; or
sending the fourth indication information in a frequency domain range other than the first frequency domain range.

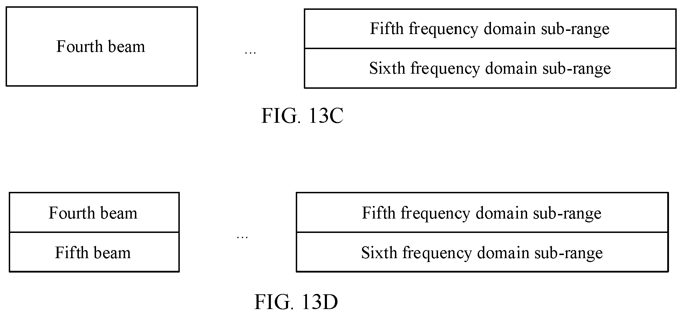

For ease of understanding, the following provides some examples:
Example 1: The station sends the trigger information to a plurality of devices in a non-frequency division manner, and the plurality of devices send, in the frequency division manner, beams used for beam training, as shown in FIG. 13C. The station sends the trigger information in the frequency domain sub-range corresponding to the fourth beam, and the plurality of devices may receive, in the preset range of the beam direction corresponding to the fourth beam, the trigger information sent by the station in the fourth beam direction, and may send the beams used for beam training in the frequency division manner in the fifth frequency domain sub-range and the sixth frequency domain sub-range.

The manner of sending the trigger information shown in Example 1 is applicable to a case in which the plurality of devices are in the beam direction in which the trigger information is sent, or the plurality of devices can receive the trigger information sent by the station in the beam direction. The trigger information may be carried in a PPDU.

For example, the station in this embodiment is the first station in the communication method shown in FIG. 6, and the trigger information may be carried in the first PPDU, to indicate the at least one second station to send, in the frequency division manner, the beam used for beam training.

Example 2: The station sends the trigger information to a plurality of devices in a frequency division manner, and the plurality of devices send, in the frequency division manner, beams used for beam training, as shown in FIG. 13D. The station separately sends the fourth indication information in a frequency domain sub-range corresponding to a fourth beam and a frequency domain sub-range corresponding to a fifth beam, where the first device is in a preset range of a beam direction corresponding to the fourth beam, the second device is in a preset range of a beam direction corresponding to the fifth beam, and the fourth beam and the fifth beam have different directions.

The manner of sending the trigger information shown in Example 2 is applicable to a case in which the plurality of devices are not in a same direction of the station, and the station supports multi-direction sending of the trigger information in the frequency division manner.

Example 3: The station sends the trigger information at a low frequency (high frequency is used in the first two examples), and at least one device sends, at a high frequency in a frequency division manner, a beam used for beam training.

It should be understood that sequence numbers of the foregoing processes do not mean a sequence of performing the processes. The sequence of performing the processes should be determined according to functions and internal logic of the processes, and should not be construed as any limitation on the implementation processes of the embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a device in an existing network architecture is mainly used as an example for description. It should be understood that, a specific form of the device is not limited in embodiments of this application. For example, all devices that can implement a same function in the future are applicable to embodiments of this application.

It may be understood that, in the foregoing method embodiments, methods and operations implemented by a device (for example, the first station and the second station) may alternatively be implemented by a component (for example, a chip or a circuit) of the device.

It may be further understood that, some optional features in embodiments of this application may be independent of other features in some scenarios, or may be combined with other features in some scenarios. This is not limited.

The foregoing describes in detail communication methods provided in embodiments of this application with reference to FIG. 6 and FIG. 12. The foregoing communication method is mainly described from perspectives of the first station and the second station. It may be understood that, to implement the foregoing functions, the first station and the second station include corresponding hardware structures and/or software modules for performing the functions.

A person skilled in the art may be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

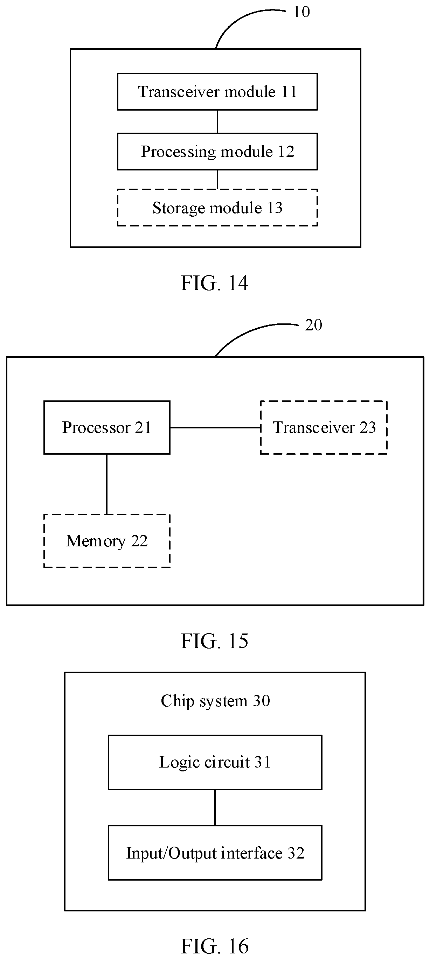

The following describes in detail communication apparatuses provided in embodiments of this application with reference to FIG. 14 to FIG. 16. It should be understood that descriptions of apparatus embodiments correspond to the descriptions of the method embodiments. Therefore, for content that is not described in detail, refer to the foregoing method embodiments. For brevity, some content is not described again.

In embodiments of this application, functional modules of a transmit end device or a receive end device may be divided based on the foregoing method examples. For example, functional modules may be divided based on functions, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which functional modules are divided based on functions is used hereinafter for description.

FIG. 14 is a block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing; or the transceiver module 11 is configured to perform receiving and sending-related operations, and the processing module 12 is configured to perform an operation other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to enable the apparatus to implement actions of a device in the foregoing method embodiments.

In a design, the apparatus 10 may correspond to the first station in the foregoing method embodiment, or may be a component (for example, a chip) of the first station.

The apparatus 10 may implement corresponding steps or procedures performed by the first station in the foregoing method embodiment. The transceiver module 11 may be configured to perform receiving and sending-related operations of the first station in the foregoing method embodiment, and the processing module 12 may be configured to perform a processing-related operation of the first station in the foregoing method embodiment.

In a possible implementation, the transceiver module 11 is configured to receive a first physical layer protocol data unit PPDU, where the first PPDU includes a first field used for beam training, a frequency domain range corresponding to the first field includes a first frequency domain sub-range and a second frequency domain sub-range, the first frequency domain sub-range and the second frequency domain sub-range have a non-overlapping part, and a sum of the first frequency domain sub-range and the second frequency domain sub-range is less than or equal to a first frequency domain range corresponding to the first PPDU. The transceiver module 11 is further configured to: receive a first beam set in the first frequency domain sub-range of the first field, and receive a second beam set in the second frequency domain sub-range of the first field, where a direction of a first beam received in the first frequency domain sub-range at a first moment is different from a direction of a second beam received in the second frequency domain sub-range at the first moment, the first beam belongs to the first beam set, and the second beam belongs to the second beam set.

In another possible implementation, the transceiver module 11 is configured to send a first physical layer protocol data unit PPDU and first indication information, where the first PPDU includes a first field used for beam training, a frequency domain range corresponding to the first field includes a first frequency domain sub-range and a second frequency domain sub-range, the first indication information indicates a size of the first frequency domain sub-range and a size of the second frequency domain sub-range, the first frequency domain sub-range and the second frequency domain sub-range have a non-overlapping part, and a sum of the first frequency domain sub-range and the second frequency domain sub-range is less than or equal to a first frequency domain range corresponding to the first PPDU.

In still another possible implementation, the transceiver module 11 is configured to send third indication information, where the third indication information indicates a first device to send a second field used for beam training, a frequency domain range corresponding to the second field includes a third frequency domain sub-range and a fourth frequency domain sub-range, and a direction of a beam sent in the third frequency domain sub-range at a second moment is different from a direction of a beam sent in the fourth frequency domain sub-range at the second moment.

In yet another possible implementation, the transceiver module 11 is configured to send fourth indication information, where the fourth indication information indicates a first device to send a third field used for beam training and indicates a second device to send a fourth field used for beam training, a frequency domain range corresponding to the third field includes a fifth frequency domain sub-range, a frequency domain range corresponding to the fourth field includes a sixth frequency domain sub-range, and a direction of a beam sent in the fifth frequency domain sub-range at a third moment is different from a direction of a beam sent in the sixth frequency domain sub-range at the third moment.

When the apparatus 10 is configured to perform the method in FIG. 6, the transceiver module 11 may be configured to perform steps of receiving and sending information in the method, for example, steps S610 and S620; and the processing module 12 may be configured to perform a processing step in the method.

When the apparatus 10 is configured to perform the method in FIG. 12, the transceiver module 11 may be configured to perform steps of receiving and sending information in the method, for example, step S1220; and the processing module 12 may be configured to perform a processing step in the method, for example, step S1210.

It should be understood that a specific process in which each unit performs the foregoing corresponding steps is described in detail in the foregoing method embodiments. For brevity, details are not described herein again.

In another design, the apparatus 10 may correspond to the second station in the foregoing method embodiment, or may be a component (for example, a chip) of the second station.

The apparatus 10 may implement corresponding steps or procedures performed by the second station in the foregoing method embodiment. The transceiver module 11 may be configured to perform receiving and sending-related operations of the second station in the foregoing method embodiment, and the processing module 12 may be configured to perform a processing-related operation of the second station in the foregoing method embodiment.

In a possible implementation, the transceiver module 11 is configured to receive a first physical layer protocol data unit PPDU, where the first PPDU includes a first field used for beam training, a frequency domain range corresponding to the first field includes a first frequency domain sub-range and a second frequency domain sub-range, the first frequency domain sub-range and the second frequency domain sub-range have a non-overlapping part, and a sum of the first frequency domain sub-range and the second frequency domain sub-range is less than or equal to a first frequency domain range corresponding to the first PPDU; and the transceiver module 11 is configured to: receive a first beam set in the first frequency domain sub-range of the first field, and receive a second beam set in the second frequency domain sub-range of the first field, where a direction of a first beam received in the first frequency domain sub-range at a first moment is different from a direction of a second beam received in the second frequency domain sub-range at the first moment, the first beam belongs to the first beam set, and the second beam belongs to the second beam set.

In another possible implementation, the transceiver module 11 is configured to receive a first physical layer protocol data unit PPDU and first indication information, where the first PPDU includes a first field used for beam training, a frequency domain range corresponding to the first field includes a first frequency domain sub-range and a second frequency domain sub-range, the first indication information indicates a size of the first frequency domain sub-range and a size of the second frequency domain sub-range, the first frequency domain sub-range and the second frequency domain sub-range have a non-overlapping part, and a sum of the first frequency domain sub-range and the second frequency domain sub-range is less than or equal to a first frequency domain range corresponding to the first PPDU.

In still another possible implementation, the transceiver module 11 is configured to receive third indication information, where the third indication information indicates a first device to send a second field used for beam training, a frequency domain range corresponding to the second field includes a third frequency domain sub-range and a fourth frequency domain sub-range, and a direction of a beam sent in the third frequency domain sub-range at a second moment is different from a direction of a beam sent in the fourth frequency domain sub-range at the second moment.

When the apparatus 10 is configured to perform the method in FIG. 6, the transceiver module 11 may be configured to perform steps of receiving and sending information in the method, for example, steps S610 and S620; and the processing module 12 may be configured to perform a processing step in the method.

When the apparatus 10 is configured to perform the method in FIG. 12, the transceiver module 11 may be configured to perform steps of receiving and sending information in the method, for example, step S1220; and the processing module 12 may be configured to perform a processing step in the method.

It should be understood that a specific process in which each unit performs the foregoing corresponding steps is described in detail in the foregoing method embodiments. For brevity, details are not described herein again.

It should be further understood that the apparatus 10 herein is presented in a form of a functional module. The term "module" herein may be an application-specific integrated circuit (application specific integrated circuit, ASIC), an electronic circuit, a processor (for example, a shared processor, a special purpose processor, or a group processor) configured to execute one or more software or firmware programs, a memory, a combinational logic circuit, and/or other appropriate components that support the described functions. In an optional example, a person skilled in the art may understand that the apparatus 10 may be specifically a mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in each of the foregoing solutions has a function of implementing corresponding steps performed by a device (for example, the first station) in the foregoing methods. The function may be implemented by hardware, or may be implemented by hardware executing corresponding software. The hardware or software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit, for example, the processing module, may be replaced with a processor, to separately perform receiving and sending operations and a related processing operation in the method embodiments.

In addition, the transceiver module 11 may be a transceiver circuit (for example, may include a receiver circuit and a transmitter circuit), and the processing module may be a processing circuit.

FIG. 15 is a diagram of another communication apparatus 20 according to an embodiment of this application. The apparatus 20 includes a processor 21. The processor 21 is configured to execute a computer program or instructions stored in a memory 22, or read data/signaling stored in a memory 22, to perform the methods in the foregoing method embodiments. Optionally, there are one or more processors 21.

Optionally, as shown in FIG. 15, the apparatus 20 further includes the memory 22, and the memory 22 is configured to store a computer program or instructions and/or data. The memory 22 and the processor 21 may be integrated together, or may be disposed separately. Optionally, there are one or more memories 22.

Optionally, as shown in FIG. 15, the apparatus 20 further includes a transceiver 23. The transceiver 23 is configured to receive a signal and/or send a signal. For example, the processor 21 is configured to control the transceiver 23 to receive and/or send a signal.

In a solution, the apparatus 20 is configured to implement operations performed by the first station or the second station in the foregoing method embodiments.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), electrically erasable programmable read-only memory (electrically EPROM, EEPROM), or a flash memory. The volatile memory may be a random access memory (random access memory, RAM). For example, the RAM may be used as an external cache. By way of example and not limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA, another programmable logic device, a discrete gate or a transistor logic device, or a discrete hardware component, the memory (storage module) may be integrated into the processor.

It should further be noted that the memory described herein is intended to include, but is not limited to, these and any other appropriate type of memory.

FIG. 16 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to and connected to a storage unit, and invoke instructions in the storage unit, to enable the chip system 30 to implement the methods and functions in embodiments of this application. The input/output interface 32 may be an input/output circuit in the chip system 30, and outputs information processed by the chip system 30, or inputs to-be-processed data or signaling information into the chip system 30 for processing.

In a solution, the chip system 30 is configured to implement operations performed by the first station or the second station in the foregoing method embodiments.

For example, the logic circuit 31 is configured to implement processing-related operations performed by the first station or the second station in the foregoing method embodiments, and the input/output interface 32 is configured to implement sending and/or receiving-related operations performed by the terminal device in the foregoing method embodiments.

An embodiment of this application further provides a computer-readable storage medium. The computer-readable storage medium stores computer instructions for implementing the method performed by a device in the foregoing method embodiments.

For example, when a computer program is executed by a computer, the computer is enabled to implement the methods performed by the first station or the second station in the foregoing method embodiments.

An embodiment of this application further provides a computer program product, including instructions. When the instructions are executed by a computer, the methods performed by the first station or the second station in the foregoing method embodiments are implemented.

An embodiment of this application further provides a communication system, including the first station and the second station.

For explanations and beneficial effects of related content in any one of the apparatuses provided above, refer to the corresponding method embodiment provided above. Details are not described herein again.

A person of ordinary skill in the art may be aware that, in combination with units and algorithm steps of the examples described in embodiments disclosed in this specification, this application may be implemented by electronic hardware or a combination of computer software and electronic hardware. Whether the functions are performed by hardware or software depends on particular applications and design constraints of the technical solution. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or the communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in a form of a software function unit and sold or used as an independent product, the functions may be stored in a computer readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending a first physical layer protocol data unit PPDU, wherein the first PPDU comprises a first field used for beam training, a frequency domain range corresponding to the first field comprises a first frequency domain sub-range and a second frequency domain sub-range, the first frequency domain sub-range and the second frequency domain sub-range have a non-overlapping part, and a sum of the first frequency domain sub-range and the second frequency domain sub-range is less than or equal to a first frequency domain range corresponding to the first PPDU; and
sending a first beam set in the first frequency domain sub-range of the first field, and sending a second beam set in the second frequency domain sub-range of the first field, wherein
a direction of a first beam sent in the first frequency domain sub-range at a first moment is different from a direction of a second beam sent in the second frequency domain sub-range at the first moment, the first beam belongs to the first beam set, and the second beam belongs to the second beam set.

2. The method according to claim 1, wherein a sequence corresponding to the first beam set that is sent on a subcarrier in the first frequency domain sub-range is a first sequence, and the first sequence is a partial sequence that is of a sequence corresponding to the first frequency domain range and that is sent on at least one first subcarrier; and
a sequence corresponding to the second beam set that is sent on a subcarrier in the second frequency domain sub-range is a second sequence, and the second sequence is a partial sequence that is of the sequence corresponding to the first frequency domain range and that is sent on at least one second subcarrier.

3. The method according to claim 1, wherein a sequence corresponding to the first beam set that is sent on a subcarrier in the first frequency domain sub-range is a first sequence, and the first sequence is a sequence corresponding to the first frequency domain sub-range; and
a sequence corresponding to the second beam set that is sent on a subcarrier in the second frequency domain sub-range is a second sequence, and the second sequence is a sequence corresponding to the second frequency domain sub-range.

4. The method according to any one of claims 1 to 3, wherein the method further comprises:
sending first indication information, wherein the first indication information indicates one or more of the following information:
a quantity of frequency domain sub-ranges corresponding to the first field, a size of the first frequency domain sub-range, or a size of the second frequency domain sub-range.

5. The method according to claim 4, wherein the first indication information further indicates that there are a plurality of frequency domain sub-ranges in the frequency domain range corresponding to the first field.

6. The method according to any one of claims 1 to 5, wherein sending the first beam set in the first frequency domain sub-range, and sending the second beam set in the second frequency domain sub-range comprises:
separately sending a plurality of beams in the first beam set in a plurality of first time domain ranges in the first frequency domain sub-range, wherein directions of the plurality of beams in the first beam set are different; and/or
separately sending a plurality of beams in the second beam set in a plurality of second time domain ranges in the second frequency domain sub-range, wherein directions of the plurality of beams in the second beam set are different.

7. The method according to claim 6, wherein the method further comprises:
sending second indication information, wherein the second indication information indicates at least one of the following information:
a quantity of first time domain ranges corresponding to the first frequency domain sub-range, configuration information of the first time domain range, a length of a training field in the first time domain range, a quantity of symbols of the training field in the first time domain range, a quantity of second time domain ranges corresponding to the second frequency domain sub-range, configuration information of the second time domain range, a length of a training field in the second time domain range, and a quantity of symbols of the training field in the second time domain range.

8. The method according to any one of claims 1 to 7, wherein the method further comprises:
receiving a response message, wherein the response message comprises an identifier of a third beam and/or location information of the third beam, wherein
the location information of the third beam indicates a frequency domain range and a time domain range that correspond to the third beam.

9. The method according to claim 8, wherein the response message further comprises measurement information of the third beam.

10. The method according to claim 8 or 9, wherein the location information of the third beam comprises:
an identifier of the frequency domain range corresponding to the third beam and an identifier of the time domain range corresponding to the third beam; or
a location identifier corresponding to the third beam, wherein the location identifier is an identifier that corresponds to the third beam and that is in a plurality of location identifiers that are identified in the first field in a chronological order in time domain and an order from a low frequency to a high frequency in frequency domain.

11. The method according to any one of claims 1 to 10, wherein the method further comprises:
sending third indication information, wherein the third indication information indicates a first device to send a second field used for beam training, a frequency domain range corresponding to the second field comprises a third frequency domain sub-range and a fourth frequency domain sub-range, and a direction of a beam sent in the third frequency domain sub-range at a second moment is different from a direction of a beam sent in the fourth frequency domain sub-range at the second moment.

12. The method according to any one of claims 1 to 11, wherein the method further comprises:
sending fourth indication information, wherein the fourth indication information indicates the first device to send a third field used for beam training and indicates a second device to send a fourth field used for beam training, a frequency domain range corresponding to the third field comprises a fifth frequency domain sub-range, a frequency domain range corresponding to the fourth field comprises a sixth frequency domain sub-range, and a direction of a beam sent in the fifth frequency domain sub-range at a third moment is different from a direction of a beam sent in the sixth frequency domain sub-range at the third moment.

13. The method according to claim 12, wherein sending the fourth indication information comprises:
sending the fourth indication information in a frequency domain sub-range corresponding to a fourth beam, wherein the first device and the second device are in a preset range of a beam direction corresponding to the fourth beam; or
separately sending the fourth indication information in a frequency domain sub-range corresponding to a fourth beam and a frequency domain sub-range corresponding to a fifth beam, wherein the first device is in a preset range of a beam direction corresponding to the fourth beam, the second device is in a preset range of a beam direction corresponding to the fifth beam, and the fourth beam and the fifth beam have different directions; or
sending the fourth indication information in a frequency domain range other than the first frequency domain range.

14. A communication method, comprising:
receiving a first physical layer protocol data unit PPDU, wherein the first PPDU comprises a first field used for beam training, a frequency domain range corresponding to the first field comprises a first frequency domain sub-range and a second frequency domain sub-range, the first frequency domain sub-range and the second frequency domain sub-range have a non-overlapping part, and a sum of the first frequency domain sub-range and the second frequency domain sub-range is less than or equal to a first frequency domain range corresponding to the first PPDU; and
receiving a first beam set in the first frequency domain sub-range of the first field, and receiving a second beam set in the second frequency domain sub-range of the first field, wherein
a direction of a first beam received in the first frequency domain sub-range at a first moment is different from a direction of a second beam received in the second frequency domain sub-range at the first moment, the first beam belongs to the first beam set, and the second beam belongs to the second beam set.

15. The method according to claim 14, wherein a sequence corresponding to the first beam set that is sent on a subcarrier in the first frequency domain sub-range is a first sequence, and the first sequence is a partial sequence that is of a sequence corresponding to the first frequency domain range and that is sent on at least one first subcarrier; and
a sequence corresponding to the second beam set that is sent on a subcarrier in the second frequency domain sub-range is a second sequence, and the second sequence is a partial sequence that is of the sequence corresponding to the first frequency domain range and that is sent on at least one second subcarrier.

16. The method according to claim 14, wherein a sequence corresponding to the first beam set that is sent on a subcarrier in the first frequency domain sub-range is a first sequence, and the first sequence is a sequence corresponding to the first frequency domain sub-range; and
a sequence corresponding to the second beam set that is sent on a subcarrier in the second frequency domain sub-range is a second sequence, and the second sequence is a sequence corresponding to the second frequency domain sub-range.

17. The method according to any one of claims 14 to 16, wherein the method further comprises:
receiving first indication information, wherein the first indication information indicates one or more of the following information:
a quantity of frequency domain sub-ranges corresponding to the first field, a size of the first frequency domain sub-range, or a size of the second frequency domain sub-range.

18. The method according to claim 17, wherein the first indication information further indicates that there are a plurality of frequency domain sub-ranges in the frequency domain range corresponding to the first field.

19. The method according to any one of claims 14 to 18, wherein receiving the first beam set in the first frequency domain sub-range and receiving the second beam set in the second frequency domain sub-range comprises:
separately receiving a plurality of beams in the first beam set in a plurality of first time domain ranges in the first frequency domain sub-range, wherein directions of the plurality of beams in the first beam set are different; and/or
separately receiving a plurality of beams in the second beam set in a plurality of second time domain ranges in the second frequency domain sub-range, wherein directions of the plurality of beams in the second beam set are different.

20. The method according to claim 19, wherein the method further comprises:
receiving second indication information, wherein the second indication information indicates at least one of the following information:
a quantity of first time domain ranges corresponding to the first frequency domain sub-range, configuration information of the first time domain range, a length of a training field in the first time domain range, a quantity of symbols of the training field in the first time domain range, a quantity of second time domain ranges corresponding to the second frequency domain sub-range, configuration information of the second time domain range, a length of a training field in the second time domain range, and a quantity of symbols of the training field in the second time domain range.

21. The method according to any one of claims 14 to 20, wherein the method further comprises:
sending a response message, wherein the response message comprises an identifier of a third beam and/or location information of the third beam, wherein
the location information of the third beam indicates a frequency domain range and a time domain range that correspond to the third beam.

22. The method according to claim 21, wherein the response message further comprises measurement information of the third beam.

23. The method according to claim 21 or 22, wherein the location information of the third beam comprises:
an identifier of the frequency domain range corresponding to the third beam and an identifier of the time domain range corresponding to the third beam; or
a location identifier corresponding to the third beam, wherein the location identifier is an identifier that corresponds to the third beam and that is in a plurality of location identifiers that are identified in the first field in a chronological order in time domain and an order from a low frequency to a high frequency in frequency domain.

24. The method according to any one of claims 14 to 23, wherein the method further comprises:
receiving third indication information, wherein the third indication information indicates a first device to send a second field used for beam training, a frequency domain range corresponding to the second field comprises a third frequency domain sub-range and a fourth frequency domain sub-range, and a direction of a beam sent in the third frequency domain sub-range at a second moment is different from a direction of a beam sent in the fourth frequency domain sub-range at the second moment.

25. A communication apparatus, comprising:
a processor, configured to execute a computer program stored in a memory, to enable the apparatus to perform the method according to any one of claims 1 to 13.

26. A communication apparatus, comprising:
a processor, configured to execute a computer program stored in a memory, to enable the apparatus to perform the method according to any one of claims 14 to 24.

27. A communication system, comprising at least one communication apparatus according to claim 25 and at least one communication apparatus according to claim 26.

28. A chip, comprising a processor and an interface, configured to invoke, from a memory, a computer program stored in the memory, and run the computer program, to perform the method according to any one of claims 1 to 24.

29. A computer-readable storage medium, configured to store a computer program, wherein the computer program comprises instructions for implementing the method according to any one of claims 1 to 24.
